(19) Europäisches Patentamt
European Patent Office
Office européen des brevets

(11) Publication number: **0 043 640**
**B1**

(12) **EUROPEAN PATENT SPECIFICATION**

(45) Date of publication of patent specification: **16.10.85**

(51) Int. Cl.[4]: **C 08 L 83/04,** C 08 K 9/06

(21) Application number: **81301792.8**

(22) Date of filing: **23.04.81**

(54) **Optically clear silicone compositions curable to elastomers.**

(30) Priority: **03.06.80 US 156003**

(43) Date of publication of application:
**13.01.82 Bulletin 82/02**

(45) Publication of the grant of the patent:
**16.10.85 Bulletin 85/42**

(84) Designated Contracting States:
**BE DE FR GB IT NL**

(56) References cited:
**GB-A-1 040 408**
**GB-A-1 131 483**
**US-A-3 915 924**
**US-A-3 996 189**

(73) Proprietor: **DOW CORNING CORPORATION**
**Midland Michigan 48640 (US)**

(72) Inventor: **Polmanteer, Keith Earl**
**305 Federal**
**Midland Michigan 48640 (US)**
Inventor: **Chapman, Harry Lee**
**3201 Washington**
**Midland Michigan 48640 (US)**

(74) Representative: **Lewin, John Harvey et al**
**Elkington and Fife High Holborn House 52/54**
**High Holborn**
**London WC1V 6SH (GB)**

**The file contains technical information submitted after the application was filed and not included in this specification**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**EP 0 043 640 B1**

**Description**

This invention relates to optically clear silicone compositions which are curable to elastomers comprising at least one polydiorganosiloxane and a hydrophobic reinforcing silica filler wherein the silica filler particles are sufficiently small in their largest dimensions that optically clear compositions result even when the refractive index of the polydiorganosiloxane is not matched with that of the filler. This invention also relates to a method of preparing such compositions. This invention also relates to the optically clear elastomers obtained when such compositions are cured.

Silicone elastomers, more commonly known as silicone rubbers, find use in many diverse areas such as sealants, tubing, prosthetic devices, wire insulation, molding compounds, contact lenses, solvent resistant hoses and many other uses. In applications where optical clarity is a necessity, compositions consisting of polydiorganosiloxanes such as polydimethylsiloxane gums can be vulcanized or cured to form optically clear elastomeric products. However, when the cured elastomer consists solely of a cured polydiorganosiloxane, the physical properties of the elastomer are poor. To improve these properties, reinforcing fillers such as finely divided silica are added to the gum prior to curing. A surface-treated (hydrophobic) reinforcing silica filler is often employed because such a filler not only improves the physical properties of the cured elastomer as compared with curing the polydiorganosiloxane alone, but also avoids the well-known problem of crepe-aging or structuring of the uncured composition. The addition of hydrophobic reinforcing silica fillers has the disadvantage of increasing the optical haze of the compositions and cured elastomers depending upon the types and amounts of polydiorganosiloxanes, filler and other components present in the formulation.

Thus the compositions and cured elastomers are no longer as optically clear as the cured polydiorganosiloxanes themselves although they may appear transparent in thin sheets where the haze is less noticeable. Contact lenses consisting of transparent silicone rubber containing silica fillers are described in U.S. Patent No. 3,228,741 issued January 11, 1966, to Becker and British Patent No. 922,871 issued April 3, 1963 to Mueller Welt Contact Lenses, Inc. Transparent room-temperature vulcanizable silicone rubber stocks are described in U.S. Patent No. 3,408,325 issued October 29, 1968, to Hittmair et al. and in U.S. Patent No. 3,474,064 issued October 21, 1969 also to Hittmair et al. Hittmair et al. teach compositions which are composed of organopolysiloxanes which can also contain fillers. The latter '064 patent teaches that a cured elastomer derived from 100 parts of a hydroxyl-endblocked dimethylpolysiloxane, 10 parts of a fume silica, 5 parts of a hydroxylated methylpolysiloxane fluid and a small amount of a curing agent was sufficiently transparent that print from a typewriter could readily be seen and read through a 4 millimeter (mm) sheet of the cured elastomer although nothing was mentioned regarding the haziness of the sample.

A commonly accepted explanation for the amount of haze which results when a silica filler is added to a polydiorganosiloxane which would otherwise cure to form an optically clear elastomer is that the haze appears to be related to the difference in refractive index (R.I.) between the silica filler (R.I. approximately 1.42 to 1.46 at 25°C, Sodium D wavelength) and the polydiorganosiloxane. The haze is apparent to the naked eye in 2.54 mm (100 mil) thicknesses when a hydrophobic reinforcing silica filler is mixed with a polydimethylsiloxane gum (R.I. approximately 1.40) and especially when mixed with a fluorine-containing polydiorganosiloxane gum such as poly-3,3,3-trifluoropropylmethylsiloxane gum (R.I. approximately 1.38). One prior art solution to the problem of haziness involves the use of polydiorganosiloxanes containing silicon-bonded organic radicals such as phenyl radicals in sufficient amounts such that the refractive index of the polydiorganosiloxanes in the composition matches the refractive index of the silica filler, thereby obtaining optically clear compositions and cured elastomers. Examples of such an approach are found in U.S. patent Nos. 3,996,189 issued December 7, 1976 and 3,996,187, issued December 7, 1976, both to Travnicek, which teach optically clear silicone elastomers and contact lenses reinforced with fume silica fillers. These patents teach that 80 to 95 parts of one or two polydiorganosiloxanes containing from 6 to 16 mole percent phenyl groups can be mixed with from 5 to 20 parts of a fume silica to obtain optically clear reinforced silicone elastomers while a polydiorganosiloxane which is free of phenyl groups such as a dimethylpolysiloxane containing a small percentage of vinyl groups results in a hazy material which had inadequate optical clarity. In U.S. Patent No. 3,624,023, issued November 30, 1971, Hartlage teaches compositions containing a surface-treated fume silica filler and a hydroxyl-endblocked polydiorganosiloxane containing phenylmethylpolysiloxane units which are vulcanizable to transparent silicone rubbers under ambient conditions.

GB—A—1131483 describes compositions which contain polysiloxanes containing a majority of methyl groups blended with a fume silica filler which has been treated with octamethylcyclotetrasiloxane. GB—A—1040408 describes a blend of organopolysiloxanes containing a majority of methyl groups which may contain a silica filler which has been trimethyl silyl treated. Both of these patents make use of the technique of matching the refractive indices of the polymer and the filler in order to produce transparent elastomers.

In U.S. Patent No. 4,008,198, issued February 15, 1977, Krohberger et al. teach that highly transparent or optically clear elastomers can be obtained by mixing (1) a nitrogen compound containing at least one triorganosilyl group of a particular type, (2) a hexaorganodisilazane, (3) silicon dioxide having a surface area of at least 50 $m^2/g$ and (4) a highly viscous polydiorganosiloxane and then kneading the mixture at

150°C under a vacuum until there is no evidence that nitrogen compounds are being evolved. The examples contained therein report that a composition prepared using a polydimethylsiloxane containing a small percentage of vinyl radicals possessed a light transparency value of 91% and a composition prepared using a polydimethylsiloxane containing 5.5 mole percent of diphenylsiloxane units and a larger percentage of methylvinylsiloxane units than in the previous example possessed a light transparency value of 96% which is consistent with the prior art technique of obtaining compositions possessing improved optical clarity by matching the refractive index of the filler with that of the polydiorganosiloxane. The haze value of each composition is not reported.

Iler, in U.S. Patent No. 2,786,042, issued March 19, 1957, teaches the preparation of sols of surface-treated colloidal silica particles which are said to have an average diameter of from 10 to 150 millimicrons. Iler teaches that such particles can be added to plastics in the form of an organosol to improve the physical properties of the plastics and teaches that even transparent or translucent plastics which have an index of refraction near that of colloidal silica will retain their transparency when filled.

One disadvantage possessed by the use of a refractive index matching technique is that one is necessarily limited in the choice of polydiorganosiloxanes which can be employed. Mixtures of polydiorganosiloxanes having similar refractive indices can be employed which, as a total mixture, match the refractive index of the silica filler, but this requires the use of extra ingredients and can thereby increase the cost of the optically clear composition. Batch-to-batch variations in the refractive index of the polydiorganosiloxanes may also affect the optical clarity of the composition and cured elastomer.

Another disadvantage of the refractive index matching technique is that such compositions and cured elastomers tend to increase in haze value with increasing temperature. This is believed to be the result of a change in the refractive index of the polydiorganosiloxane component of the mixture which is not matched by a corresponding change in the refractive index of the filler. Such an increase in haze can be detrimental where such cured elastomers are used as an interlayer in windshields used in supersonic aircraft where the windshields are known to heat up at high speeds due to the flow of air molecules across the windshield during flight.

Another approach to obtaining transparent compositions is exemplified by Daudt in U.S. Patent No. 3,036,985, issued May 29, 1962, which employes a copolymeric filler composed of $QSiO_{3/2}$ units, $SiO_2$ units, $(CH_3)_2SiO$ units and $(CH_3)_3SiO_{1/2}$ units where Q is an aliphatic hydrocarbon radical of less than 5 carbon atoms. The ratio of the various polymer (siloxane) units in the filler is said to be critical in obtaining silicone rubber possessing the combination of optical clarity and good stress-strain properties described in the patent specification. This approach requires the use of a cogel filler produced by first preparing a cogel of $SiO_2$ units and $QSiO_{3/2}$ units and then reacting the cogel with organosilicon compounds containing $(CH_3)_2SiO$ and/or $(CH_3)_3SiO_{1/2}$ units to produce a filler with the required ratio of siloxane units.

From the foregoing discussion, it appears that there is a need for an optically clear polydiorganosiloxane composition curable to an elastomer which overcomes the above problems.

The present invention provides an optically clear polydiorganosiloxane composition containing a hydrophobic reinforcing silica filler which can be cured to form an elastomer. These compositions possess a luminous transmittance value of greater than 85% and a haze value of less than 4% per 2.54 millimeter (100 mil) thickness without the necessity for matching the refractive index of the polydiorganosiloxane with that of the silica filler. A further advantage of such compositions resides in the fact that the haze value of such compositions changes very little when the composition is heated from 25°C to 100°C when compared with compositions wherein the optical clarity obtained by matching the refractive index of the polydiorganosiloxane to that of the filler. Compositions of the present invention can utilize various types of polydiorganosiloxanes, especially polydimethylsiloxanes and poly - 3,3,3 - trifluoropropylmethylsiloxanes, provided that the polydiorganosiloxanes chosen can be cured to form optically clear compositions in the absence of silica fillers. The cured products are reinforced elastomers useful as optically clear articles. The present invention also provides a method for preparing the above compositions which employs the use of a wet or fluid filler composition.

The optical clarity is obtained through the use of a hydrophobic reinforcing silica filler consisting of surface-treated particles consisting essentially of $SiO_{4/2}$ units wherein substantially all of the particles are of such a size that when properly incorporated into the polydiorganosiloxane, they do not appreciably scatter light and hence result in optically clear compositions regardless of the refractive index of the polydiorganosiloxane employed. Furthermore, the silica filler particles are of such a shape that they result in reinforced silicone elastomers. For the purposes of the present invention, the term "silica particles" as used hereinafter is intended to include both primary silica particles and aggregates of such primary particles.

This invention relates to an optically clear composition curable to an elastomer which comprises:

(A) 100 parts by weight of at least one polydiorganosiloxane consisting essentially of siloxane units selected from the group consisting of siloxane units of the average unit formula

$X_aR_bSiO_{\frac{4-a-b}{2}}$ and $X_aR_c$ 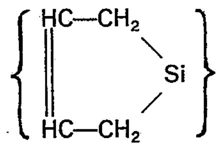 $O_{\frac{2-a-c}{2}}$

wherein each R radical is selected from the group consisting of alkyl radicals of from 1 to 6 inclusive carbon atoms, cyclohexyl radicals, phenyl radicals, halogenated alkyl radicals of from 1 to 10 inclusive carbon atoms and alkenyl radicals of from 2 to 6 inclusive carbon atoms, each X being selected from the group consisting of hydroxyl radicals, hydrogen radicals and alkoxy radicals of from 1 to 6 inclusive carbon atoms, at least 50 percent of the total amount of R radicals and

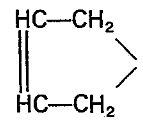

radicals present in said polydiorganosiloxane being methyl radicals, a having a value of from 0 to 1 inclusive, b having a value of from 1 to 3 inclusive and c having a value of from 0 to 1 inclusive, the sum of a+b having a value of from 1 to 3 inclusive, the sum of a+c having a value of from 0 to 1 inclusive, the values of a, b and c being such that the ratio of total R radicals and

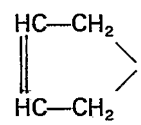

radicals to total silicon atoms present in said polydiorganosiloxane is in the range of from 1.98/1 to 2.02/1 inclusive, said polydiorganosiloxane having a viscosity of at least 0.1 pascal · seconds at 25°C, and

(B) 15 to 120 parts by weight of a hydrophobic reinforcing silica filler consisting essentially of surface-treated silica particles wherein said particles consist essentially of $SiO_{4/2}$ units containing a sufficient amount of organosiloxy units chemically bonded to the surface of said particles to render the silica filler hydrophobic, said organosiloxy units being provided by at least 0.05 moles of organosilicon hydrophobic compound per mole of $SiO_{4/2}$ units and being selected from the group consisting of $R_3SiO_{1/2}$ units, $R_2SiO$ units, $O_{1/2}R_2SiO(R_2SiO)_dSiR_2O_{1/2}$ units, $XR_2SiO(R_2SiO)_dSiR_2O_{1/2}$ units and mixtures thereof where each R and each X are as above defined and d has an average value of from 1 to 12 inclusive, wherein substantially all of said particles of (B) are sufficiently small in their largest dimension such that the mixture of (A) and (B) is an optically clear composition possessing a luminous transmittance value of at least 85% and a haze value of no greater than 4% per 2.54 millimeter thickness of said composition of 23°±2°C according to the procedure set out in ASTM D1003-61 and wherein the haze value of a composition consisting of a mixture of 100 cubic centimeters of (A) at 23°±2°C and 60 grams of (B) does not increase by more than 1% per 2.54 millimeter thickness of said mixture upon heating the mixture from 23°±2°C to 100°±5°C.

This invention also relates to a composition as described above containing at least one curing agent.

This invention further relates to an elastomer formed upon curing the above-described compositions.

This invention further relates to a method of producing optically clear compositions curable to elastomers which comprises the steps of (I) mixing the above polydiorganosiloxanes with either a wet, gelled filler composition or a wet, fluid composition containing the above hydrophobic reinforcing silica filler to form a mixture, without matching the refractive indices of the polydiorganosiloxane and the filler, and (II) removing the volatile portion of said mixture to form an optically clear composition. This invention further relates to the above method which additionally includes the step (III) of mixing at least one curing agent into the composition.

Component (A) is at least one polydiorganosiloxane which is at least one linear or substantially linear polymer consisting essentially of a combination of the above described siloxane units such that in the polydiorganosiloxane as a whole there is an average of from 1.98 to 2.02 inclusive R radicals and

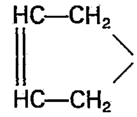

radicals attached to silicon per silicon atom. The term "consisting essentially of" is intended to mean that the above-described polydiorganosiloxanes can also contain relatively minor amounts of mono-organosiloxane and triorganosiloxane units of the average unit formula $RSiO_{3/2}$ and $R_3SiO_{1/2}$ wherein each

R is described above. Such units can be present only in minor amounts such that the average ratio of R radicals and

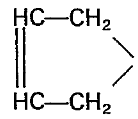

radicals to silicon atoms is from 1.98/1 to 2.02/1 inclusive. As is well known in the art, is is often advantageous to employ triorganosiloxane end-blocked polydiorganosiloxanes, such as those endblocked with trimethylsiloxy, dimethylvinylsiloxy or methylphenylvinylsiloxy units.

The polydiorganosiloxanes useful in compositions of the present invention are those which are capable of being cured to an elastomer and consist essentially of siloxane units selected from the group consisting of siloxane units of the average unit formula

$X_aR_bSiO_{\frac{4-a-b}{2}}$ and $X_aR_c$ 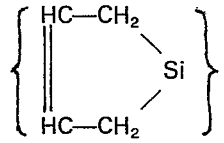 $O_{\frac{2-a-c}{2}}$

where each R can be an alkyl radical of from 1 to 6 inclusive carbon atoms such as methyl, ethyl, n-propyl, isopropyl or hexyl; cyclohexyl radicals, phenyl radicals, halogenated alkyl radicals of from 1 to 10 inclusive carbon atoms such as chloromethyl, 3-chloropropyl, bromodecyl, 3,3,3-trichloropropyl or fluoroalkyl radicals of the formula $C_tF_{2t+1}CH_2CH_2$ where t has a value of from 1 to 8 inclusive such as $CF_3CH_2CH_2$, $C_3F_7CH_2CH_2$, $C_7F_{15}CH_2CH_2$ and $C_8F_{17}CH_2CH_2$ and alkenyl radicals of from 2 to 6 inclusive carbon atoms such as vinyl, allyl, or hexenyl. Each X can be a hydroxyl radical, a hydrogen radical or an alkoxy radical of from 1 to 6 inclusive carbon atoms such as methoxy, ethoxy, propoxy, isobutoxy or hexoxy radicals. The term "consisting essentially of siloxane units" is also intended to mean that relatively minor amounts of siloxane units containing other types of organic radicals can be present in polydiorganosiloxanes useful in the present invention as long as both the optical clarity and the ability of the polydiorganosiloxanes to cure to form an elastomer has not been impaired by their presence. The values of a, b and c are described above and are such that the ratio of R radicals and

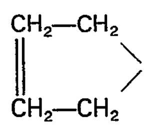

radicals to silicon atoms in the polydiorganosiloxane is as above.

Examples of siloxane units are $(CH_3)_2SiO$, $(CF_3CH_2CH_2)(CH_3)SiO$, $H(CH_3)SiO$,

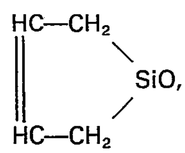

$(C_2H_5)CH_3SiO$, $(C_2H_3)CH_3SiO$, $(C_6H_5)CH_3SiO$, and $(C_6H_5)_2SiO$, among others, and endblocking units such as $HO(CH_2)_2SiO_{1/2}$, $(C_2H_3)(CH_3)_2SiO_{1/2}$, $(CH_3)_3SiO_{1/2}$, $(CH_3O)(CH_3)_2SiO_{1/2}$, $(CH_3)(C_6H_5)(C_2H_3)SiO_{1/2}$ and

HO 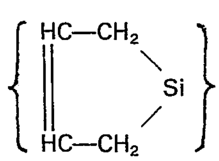 $O_{1/2}$,

among others. The polydiorganosiloxanes can be homopolymers of the above siloxane units such as a hydroxy-endblocked polydimethylsiloxane or can consist of a combination of different siloxane units such as a copolymer of $(CF_3CH_2CH_2)CH_3SiO$ units and $(C_2H_3)CH_3SiO$ units or a polydiorganosiloxane consisting essentially of $(CH_3)_2SiO$ units, $(C_6H_5)CH_3SiO$ units and $(C_2H_3)CH_3SiO$ units which is endblocked with $(C_2H_3)(CH_3)_2SiO_{1/2}$ units, provided that there is an average of from 1.98 to 2.02 inclusive R radicals and

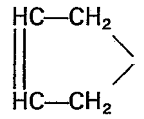

radicals per silicon atom present in the polydiorganosiloxane.

The above polydiorganosiloxanes must have a viscosity of at least 0.1 pascal · seconds (100 centipoise) at 25°C and at least 50 percent of the total R groups in the polydiorganosiloxane should be methyl radicals to obtain an elastomeric product with reasonably good physical properties upon curing the compositions of the present invention. Preferably, the R radicals are methyl radicals, vinyl radicals, 3,3,3-trifluoropropyl radicals or combinations thereof, each X is a hydroxy radical, methoxy radical or ethoxy radical, and the polydiorganosiloxane contains no more than 5 mole percent of siloxane units containing vinyl radicals, there being no more than one vinyl radical and no more than one 3,3,3-trifluoropropyl radical per siloxane unit. More preferably, the polydiorganosiloxane contains at least two siloxane units containing vinyl radicals. Phenyl radicals can be used to improve the low temperature flexibility or oxidation resistance of the cured elastomers, but are not necessary to obtain optically clear compositions. For example, cured elastomers can be prepared using polydiorganosiloxane gums which are composed of dimethylsiloxane and at least 7 mole percent of 3,3,3 - trifluoropropylmethylsiloxane unit. Such elastomers are known to possess good low temperature flexibility. Cured elastomers with a high degree of solvent resistance can be obtained when polydiorganosiloxanes consisting primarily of 3,3,3 - trifluoropropylmethylsiloxane units are employed. To obtain good solvent resistance, it is preferred that at least 95 mole percent of the siloxane units present contain 3,3,3-trifluoropropyl radicals, more preferably, there being no more than one such radical per siloxane unit.

To prepare low consistency compositions which can be squeezed from a tube during application, e.g., for use as sealants, it is preferable that the viscosity of the polydiorganosiloxane be low enough that it is a fluid material, preferably less than 10 pascal · seconds and more preferably less than 5 pascal · seconds at 25°C. High consistency formulations which can be used in the manufacture of eyepieces for gas masks or windshield interlayers preferably employ gums which have a viscosity of at least 10 kilopascal · seconds (10,000,000 centipoise) at 25°C or, using another commonly accepted designation, the Williams plasticity of the gum is greater than about 50 mils (1.27 mm) at 25°C. Polydiorganosiloxanes useful in compositions of the present invention are known articles of commerce and many are commercially available. Methods for their manufacture are well known in the art as exemplified by the following United States Patents: 2,490,357 (Hyde) issued December 6, 1949; 2,542,334 (Hyde) issued February 20, 1951; 2,927,907 (Polmanteer) issued March 8, 1960; 3,002,951 (Johannson) issued October 3, 1961; 3,161,614 (Brown et al.) issued December 15, 1964; 3,186,967 (Nitzche et al.) issued June 1, 1965; 3,509,191 (Atwell) issued April 28, 1970; and 3,697,473 (Polmanteer et al.) issued October 10, 1927 which teaches some of the types of well-known polydiorganosiloxanes which may find use in the compositions of the present invention and methods for their preparation.

A preferred composition is one wherein said (A) is a polydiorganosiloxane gum having a viscosity of at least 10 kilopascal · seconds at 25°C and wherein at least two siloxane units present in said (A) contain vinyl radicals, any X radicals present in said (A) being hydroxyl radicals.

Another preferred composition is one wherein each R radical present in said polydiorganosiloxane is selected from the group consisting of methyl radicals, vinyl radicals and 3,3,3-trifluoropropyl radicals, wherein at least 7 mole percent of the siloxane units present in said polydiorganosiloxane contain 3,3,3-trifluoropropyl radicals and no more than 5 mole percent of the siloxane units present in said polydiorganosiloxane contain vinyl radicals, there being no more than one vinyl radical per siloxane unit and no more than one 3,3,3-trifluoropropyl radical per siloxane unit, the mole percent of said siloxane units being based upon the total moles of siloxane units present in said polydiorganosiloxane and wherein said organosiloxy units of (B) consist primarily of organosiloxy units containing one 3,3,3-trifluoropropyl radical per silicon atom, each of the remaining R radicals being selected from the group consisting of methyl radicals and vinyl radicals.

The novel feature of the optically clear compositions of the present invention resides in the use of a hydrophobic reinforcing silica filler wherein substantially all of the filler particles are sufficiently small in their largest dimensions that a composition containing a hydrophobic reinforcing silica filler can be obtained which possesses the same order of magnitude of optical clarity as does the filler-free composition itself. The term hydrophobic is intended to mean that at least 70 percent and preferably all of the dry filler is visually observed to float on top of distilled water after a small amount of the filler has been added to a half-filled container of water and vigorously shaken. Hydrophobic fillers are employed to minimize or completely avoid the necessity for the use of additives such as low molecular weight hydroxyl-endblocked polydimethylsiloxane fluids to overcome the problem of crepe-aging of the composition which is believed to be due to filler-polydiorganosiloxane interactions.

The amount of filler is based upon the amount of polydiorganosiloxane present in the composition and can be present on a dry solids basis of from 15 to 120 parts by weight of filler per 100 parts by weight of polydiorganosiloxane present. Minor amounts of cross-linking compounds such as polyorganosiloxanes containing silicon hydride radicals are not included in the calculation of parts of filler. Fifteen parts of filler

is about the minimum needed to obtain a useful reinforced elastomeric product while 120 parts is about the maximum which can be added. As is known to those skilled in the art, not all reinforcing silica fillers can be utilized at high filler loading levels. Some fillers with very high surface areas absorb essentially all of the polydiorganosiloxane and the use of too much filler results in a hard or crumbly, useless product. More preferably, the amount of filler utilized is in the range of from 40 to 90 parts by weight of filler per 100 parts by weight of polydiorganosiloxane.

The filler itself consists essentially of surface-treated silica particles and the term "consisting essentially of" is intended to mean that there may be a small amount of low molecular weight polysiloxanes present in the filler which are soluble in aromatic solvents such as benzene or toluene due to the manner in which the filler is prepared. As long as the amount of such low molecular weight material is of the order of a few percent or less, it will not affect the reinforcing properties of the filler. The surface-treated silica particles themselves are particles consisting essentially of a core of $SiO_{4/2}$ units and are not cogels of $QSiO_{3/2}$ and $SiO_2(SiO_{4/2})$ units such as the fillers described in U.S. Patent No. 3,036,985 to Daudt described above. These particles are believed to form a central core of $SiO_{4/2}$ units which contains a sufficient amount of organosiloxy units chemically bonded to the surface of the core to surface-treat or form at least a monolayer at the surface of the core to result in hydrophobic filler particles. For the purposes of the present invention, the term "units" includes both the monomeric units and the polymeric groups as hereinafter illustrated. These organosiloxy units are selected from the group consisting of $R_3SiO_{1/2}$ units, $R_2SiO$ units, $O_{1/2}R_2SiO(R_2SiO)_dSiR_2O_{1/2}$ units (both ends of the polysiloxane being bonded to the surface of the silica particles), $XR_2SiO(R_2SiO)_dSiR_2O_{1/2}$ units and mixtures thereof where each R and X were previously described and d has an average value of from 1 to 12 inclusive. Examples of such units are $(CH_3)_3SiO_{1/2}$ units, $(CH_3)_2SiO$ units, $(CF_3CH_2CH_2)(CH_3)_2SiO_{1/2}$ units and $(CH_3O)(CH_3)_2SiO\{(CH_3)_2SiO\}_dSi(CH_3)_2O_{1/2}$ units.

The silica fillers useful in the present invention must possess a structure which is capable of acting as a reinforcing filler for silicone rubber as the term is generally used by those skilled in the art. It is very difficult to accurately define the silica fillers which will result in optically clear compositions in terms of the physical characteristics alone. In general, a surface-treated silica filler of the type described above which falls within the scope of each and every one of the following criteria would be expected to result in optically clear compositions. Substantially all of the silica particles of the filler should have less than 4,000 Angstroms as their largest dimension when observed under an electron microscope, i.e., the particles should be smaller than the smallest wavelength of visible light to avoid light scattering which produces haze. The filler should also have a specific surface area within the range of about 250 to 900 $m^2/g$ (measured on a dry sample by a modified B.E.T. adsorption method of the type first described by Nelson et al. in *Anal. Chem.* 30, pp. 1387ff (1958)), a pore volume within the range of 0.5 to 7.0 $cm^3/g$ (pore volume can be measured as the volume of a low molecular weight, low viscosity oil which is just sufficient to completely wet out a known weight of filler or by employing the method described in ASTM C699-79), an effective refractive index within the range of about 1.42 to 1.46 at 25°C, Sodium D wavelength and a real density (not bulk density) in the range of from 1.24 to 1.95 $g/cm^3$ (real density is measured using a displacement method (such as the one set out in ASTM C699-79) which employs placing a known weight of filler in a known density and volume of a non-volatile liquid to accurately determine the actual volume occupied by the filler).

As is well known in the art, silica fillers are generally made up of primary particles or ultimate particles of very small dimensions which can be aggregated into what have been called "secondary particles" or simply "aggregates" which are made up of a number of primary particles chemically bonded to each other to form a structured silica particle which is capable of acting as a reinforcing filler for silicone rubber. It is these latter particles or aggregates which should be sufficiently small in their largest dimensions to result in the optically clear compositions of the present invention. The particle size distribution should also be such that optically clear compositions can be obtained.

On pages 462 to 510 of The Chemistry of the Silicates, John Wiley & Sons, Inc. (1979) Iler describes some of the structure of silica gels and powders, and, in particular, the analytical methods available for measuring the physical properties of such gels and powders.

When observed under an electron microscope, silica filler samples which would give optically clear compositions were found to be substantially composed of particles which were, on the average, noticeably smaller in their largest dimensions than were the particles of fume silica fillers which did not give optically clear compositions. However, electron microscopy techniques were not considered to be accurate enough to be able to predict which fillers would give optically clear compositions due to the extremely small amount of filler which can be observed under high magnification and due to the fact that one cannot be assured that the tiny sample observed is representative of the entire filler. However, the above filler measurements are useful as guidelines in selecting fillers for use in optically clear compositions.

The simplest and most practical method for determining whether or not a hydrophobic reinforcing silica filler is useful in the compositions of the present invention is to measure the haze value and the luminous transmittance value of a 2.54 millimeter (mm) thickness of the homogeneously blended composition. Preferably the measurements are made on a sample pressed between two sheets of clean glass to ensure that a uniform thickness of the composition is being used during the measurement process. Hydrophobic reinforcing silica fillers possessing the requisite filler particle size and particle size distribution will result in compositions having haze values of less than 4% per 2.54 mm thickness and luminous

transmittance values of at least 85% per 2.54 mm thickness when the filler is homogeneously blended with the polydiorganosiloxane(s) chosen. Use of the above measurements to select fillers avoids the above-described lack of accuracy which is inherent in the use of an electron microscopic technique to identify potentially useful fillers. The procedure followed to obtain the above values is set out in ASTM D1003-61. The instrument used to obtain the values reported in the following examples was a Gardner Pivotable Sphere Hazemeter (Model HG 1024) equipped with a Model PG 5500 Digital Photometer (Gardner Laboratory, Bethesda, MD 20014). CIE Source A, sometimes called Illuminant A, was used in measuring the above values.

Another test which is useful in identifying silica fillers having the required filler particle dimensions involves preparing a homogeneously blended mixture of 100 cubic centimeters (cc, measured at 23°±2°C) of the polydiorganosiloxane, or mixtures of two or more thereof, chosen and 60 grams of the hydrophobic reinforcing silica filler to be evaluated. The haze value of a uniform 2.54 mm thickness of this mixture should not increase by more than 1 percent upon heating the mixture from 23°±2°C to 100°±5°C. The refractive index of a polydiorganosiloxane is known to change upon heating. Therefore, if the optical clarity of the mixture results from the prior art technique of refractive index matching, for example when phenyl radicals are employed for the purpose of adjusting the refractive index of the polydiorganosiloxane to that of the silica filler, the haze value of the mixture at 100°±5°C will be larger than that of the same composition at 23°±2°C due to the increased difference between the refractive index of the polydiorganosiloxane and the silica filler at the higher temperature. Compositions of the present invention do not rely upon refractive index matching to obtain optical clarity and therefore the haze value of such compositions at 100°±5°C will not increase by more than 1 percent from the haze value measured at the lower temperature.

The hydrophobic reinforcing silica filler useful in the compositions of the present invention can be differentiated from others which have a larger overall particle size and require refractive index matching of the filler with the polymer to obtain optically clear compositions simply by measuring the refractive index of the filler and combining that filler with a polydiorganosiloxane having a refractive index which differs from that of the filler by at least 0.025 units. For example, a composition containing a hydrophobic, reinforcing silica filler of a sufficiently small particle size (a refractive index about 1.428) would be expected to possess a haze value of less than 4 percent per 2.54 mm thickness when it is combined with a polydimethylsiloxane gum having a refractive index of about 1.403, especially when 60 grams or more of such a filler is combined with 100 cc of polydiorganosiloxane as described above.

Thus, the term "optically clear" as used in describing the compositions of the present invention means that the composition possesses a luminous transmittance value of at least 85%, a haze value of no greater than 4 percent and the haze value of a homogeneously blended mixture consisting of 60 grams of filler and 100 cc of either one polydiorganosiloxane or mixtures of two or more thereof, does not increase in haze value by more than 1 percent upon heating the mixture from 23°±2°C to 100°±5°C, all values being based upon a uniform 2.54 mm thickness of the composition. As will be noted, infra, the compositions should be within the first two haze and luminous transmittance value limitations when curing agents and, if any are used, other additives are present in the composition. Heating may cause compositions containing curing agents to cure, so the last measurement which involves heating the mixture is preferably made in the absence of a curing agent.

The silica fillers must be reinforcing fillers as the term is generally recognized in the art. It is well known that many types of filler can be used to reinforce silicone rubber, for example, increase the tensile strength, when the filler is present in a sufficiently large amount even when the filler does not possess the necessary structure to act as an efficient reinforcing agent. This is a wasteful use of filler and even though the cured elastomer may possess a tensile strength in excess of 6.2 megapascals (900 p.s.i.), the tear strength or durometer values may be very low. This invention is directed towards compositions containing a hydrophobic reinforcing silica filler which will result in a useful cured silicone elastomer with a good balance of physical properties and a reasonable amount of filler.

For the purposes of the present invention, a hydrophobic silica filler is considered to be a hydrophobic reinforcing silica filler for silicone rubber if the tensile strength at break of a vulcanized silicone rubber consisting of a cross-linked polydimethylsiloxane gum and the silica filler to be evaluated is at least 6.2 MPa (900 p.s.i.). Such an evaluation can be carried out by using a formulation composed of a mixture of 100 parts by weight of a dimethylvinylsiloxy-endblocked polydiorganosiloxane gum consisting essentially of 99.86 mole percent of dimethylsiloxane units and 0.14 mole percent of methylvinylsiloxane units based upon the total moles of diorganosiloxane units present (it being understood that a minor amount of other types of units such as $SiO_{4/2}$ and $CH_3SiO_{3/2}$ may be present as a result of impurities introduced during the manufacture of such a gum) wherein the polymer has a Williams plasticity (4.2 gram sample) in the range of about 55—65 mils (1.40—1.65 millimeters), 60 parts by weight of the filler to be evaluated (non-volatile filler solids) and 1 part by weight of 2,5 - dimethyl - 2,5 - di(t - butylperoxy)hexane catalyst. This formulation is allowed to stand overnight at room temperature after mixing, re-milled on a two-roll mill to soften the stock and heat/press cured in a molding chase for 10 minutes at about 170—175°C. The tensile strength exhibited by such cured elastomer stocks, measured according to ASTM D412, should be at least 6.2 MPa (900 p.s.i.). When fillers which have been rendered hydrophobic with organosilicon hydrophobing compounds containing fluorinated alkyl radicals are to be evaluated, it is preferable to employ the above procedure using 45 parts of non-volatile filler solids and to substitute a fluorine-containing polydiorganosiloxane gum having the composition described as Gum C, infra, having a Williams plasticity in the range of 90—125 mils (2.29—3.18 mm) for the above polydiorganosiloxane gum.

The best method presently known to the applicants for producing such a filler is by the alkaline hydrolysis of an alkyl silicate such as methyl orthosilicate, $Si(OCH_3)_4$; ethyl orthosilicate, $Si(OC_2H_5)_4$; methyl polysilicate or ethyl polysilicate, preferably, the latter two alkyl silicates have an average molecular weight of less than 1000 g/mole. More preferably, the alkyl silicate is methyl orthosilicate. The hydrolysis is conducted under alkaline conditions in the presence of at least 70% of one-half of the stoichiometric amount of water necessary to completely hydrolyze the theoretical amount of alkoxy groups present in the alkyl silicate chosen. To ensure solubility of the alkyl silicate and to aid in the formation of a silica filler having the proper structure and particle size, at least one water miscible lower aliphatic alcohol such as methanol, ethanol, n-propanol and isopropanol can be present during the hydrolysis of the alkyl silicate. Alcohol is also formed during the hydrolysis of the alkyl silicate and aids in the initial solubilization of the alkyl silicate thereby promoting the rapid hydrolysis and condensation of the alkyl silicate into a silica filler having the desired particle size. Preferably, at least 50 percent by weight of the total amount of alcohol (the sum of the alcohol added and that generated by hydrolysis) and water present in a hydrolysis mixture consisting of alkyl silicate, water, alcohol and basic catalyst used to render the mixture alkaline be alcohol. The preferred alcohol is methanol.

The hydrolysis and condensation of alkyl silicates is known to proceed according to the following general equation

$$Si(OZ)_4+2H_2O \rightarrow SiO_2+4ZOH$$

where Z is a methyl group in the case of methyl orthosilicate or methyl polysilicate and Z is an ethyl group in the case of ethyl orthosilicate or ethyl polysilicate. Therefore in the total reaction, one-half mole of water per alkoxy or —OZ group in the alkyl silicate (100% of the theoretical or stoichiometric amount) is required to completely hydrolyze the alkyl silicate to form a hydrolyzed adduct which then condenses into the corresponding theoretical $SiO_{4/2}$ or silicon dioxide units. It will be assumed that the alkyl silicate is completely hydrolyzed and condensed although it is well known that the actual structure of the silica filler core is not entirely made up of $SiO_{4/2}$ units because some of the silicon atoms have hydroxyl and alkoxy radicals remaining after the hydrolysis and condensation reaction is completed. The actual amount of hydroxyl and alkoxy radicals remaining in the product is dependent upon several variables such as the amount of water, alcohol and/or catalyst initially present and also upon the theoretical $SiO_2$ content of the hydrolysis mixture. For this reason, about 70% of one-half of the theoretical or stoichiometric amount of water necessary to completely hydrolyze the alkoxy groups on the alkyl silicate is the minimum amount that can be used to produce silica fillers according to this method. It can be preferable to use approximately 100% of one-half of the stoichiometric amount of water because the resulting silica filler-containing compositions are substantially free of water and as a result, there is one less component to be separated during the re-cycling of the volatile liquid by-products. However, satisfactory hydrophobic reinforcing silica fillers can also be produced by the above method when greater than 120% of one-half of the stoichiometric amount of water is present in the mixture.

The amount of alkyl silicate employed is sufficient to provide at least 3 parts by weight of theoretical $SiO_{4/2}$ units per 100 parts by weight of the total amount of alkyl silicate, water, alcohol and basic catalyst present in the formulation to obtain a commercially practical amount of filler and the maximum amount is governed by the theoretical maximum which is about 32 parts by weight of theoretical $SiO_{4/2}$ units in the case of methyl orthosilicate. Because the hydrolysis reaction is exothermic and becomes more difficult to control above 20 parts of theoretical $SiO_{4/2}$ units, a preferred range is from 3 to 20 inclusive parts and more preferably, in the range of from 8 to 17 inclusive parts of theoretical $SiO_{4/2}$ units per 100 parts of the above total.

The organosiloxy units employed to render the surface of the silica filler hydrophobic are derived from organosilicon hydrophobing compounds such as organosilanes, organosilazanes, low molecular weight diorganopolysiloxanes and diorganopolysilazanes which will not render the reaction mixture acidic. Suitable organosilicon hydrophobing compounds can be those possessing the average formula $R_nSiY_{4-n}$, $(R_3Si)_2NH$, $(R_3Si)_2O$, $(R_2SiO)_e$, $(R_2SiNH)_e$, $R'O(R_2SiO)_dR'$, $(R_3Si)_2NR''$ and $(R_2SiNR'')_e$ and mixtures thereof. Each R' can be hydrogen or R'', Each R'' can be an alkyl radical of from 1 to 4 inclusive carbon atoms such as methyl, ethyl, propyl, isopropyl, butyl or isobutyl. Each Y can be —OH, —OR such as methoxy or butoxy, —NHR'' such as $—NHCH_3$ or $—NHCH_2CH_3$, or $—NR''_2$ such as $—N(CH_3)_2$ or $—N(C_2H_5)_2$. The average value of n is from 2 to 3 inclusive, R and d are as above and e has an average value of from 3 to 6 inclusive.

The amount of organosilicon hydrophobing compound which is useful in rendering the silica filler hydrophobic can be calculated on the basis of moles of hydrophobe agent per mole of theoretical $SiO_{4/2}$ units present in the filler and must be employed in sufficient amounts to render the silica filler hydrophobic. At least 0.05 moles of organosilicon hydrophobing compound per mole of $SiO_{4/2}$ units is used. More preferably, in the case of organosilicon hydrophobing compounds of the average formula $(R_2SiO)_e$, $(R_2SiNH)_e$, $R_nSiY_{4-n}$ where n has an average value of 2, $(R_2SiNR'')_e$ and $R'O(R_2SiO)_dR'$, a range of from 0.05 to 0.5 moles of organosilicon hydrophobing compounds per mole of $SiO_{4/2}$ units is generally sufficient. In the case of organosilicon hydrophobing compounds of the average formula $(R_3Si)_2NH$, $(R_3Si)_2O$ and

$(R_3Si)_2NR''$, a range of from 0.08 to 0.5 moles of organosilicon hydrophobing compounds per mole of theoretical $SiO_{4/2}$ units is generally sufficient. In the case of organosilicon hydrophobing compounds of the average formula $R_nSiZ_{4-n}$ where n has an average value of 3, a range of about 0.15 to 1.0 moles of hydrophobe agent per mole of theoretical $SiO_2$ units is generally sufficient. For example, one mole of hexamethyldisilazane is considered to be one mole of hydrophobe agent for the purposes of this calculation, but it is recognized that this compound provides two moles of organosiloxy units (trimethylsiloxy units) per mole of hexamethyldisilazane.

Examples of suitable organosilicon hydrophobing compounds are organosilanes such as dimethyldimethoxysilane, methylethyldimethoxysilane, methylvinyldimethoxysilane, 3,3,3 - trifluoropropylmethyldimethoxysilane, trimethylmethoxysilane, trimethylsilanol, dimethylphenylmethoxysilane, dimethylpropylmethoxysilane, dimethylphenylpropoxysilane, $(CH_3)_3SiNH_2$, $(CH_3)_3SiNHCH_3$, $(CH_3)_2Si(NHCH_3)_2$, $(CH_3)_3SiN(CH_3)_2$, sym - tetramethyldivinyldisilazane, sym - tetramethyl - bis - 3,3,3 - trifluoropropyldisilazane, sym - tetramethyldiphenyldisilazane, sym - tetramethyldivinyldisiloxane, and hexamethyldisiloxane; cyclic polyorganosiloxanes such as 1,3,5 - trimethyl - 1,3,5 - trivinylcyclotrisiloxane, octamethylcyclotetrasiloxane, hexamethylcyclotrisiloxane, 1,3,5 - trimethyl - 1,3,5 - tris(3,3,3 - trifluoropropyl)cyclotrisiloxane, hexamethylcyclotrisilazane and octamethylcyclotetrasilazane and linear polydiorganosiloxanes such as a mixture of methoxy-endblocked polydimethylsiloxanes of the average general formula $CH_3O\{(CH_3)_2SiO\}_dCH_3$ where d has an average value of from 5—7 wherein the mixture is formed by adding a basic catalyst to a methanol solution of hexamethylcyclotrisiloxane, and linear polydimethylsiloxanes such as $HO\{(CH_3)_2SiO\}_dOH$. Mixtures of different organosilicon hydrophobing compounds can also be used. Preferred among the organosilicon hydrophobing compounds are one or more compounds having the average unit formula $\{(CH_3)_3Si\}_2NH$, $\{(CH_3)_2(CF_3CH_2CH_2)Si\}_2NH$, $(CH_3)R'''SiO_e$, $CH_3O\{(CH_3)R'''SiO\}_dR''''$ and $(CH_3)R'''Si(OR'')_2$ wherein each R''' is a methyl radical, a 3,3,3-trifluoropropyl radical or a vinyl radical, each R'''' is hydrogen or a methyl radical and the average value of e is about 3. To obtain optimum optical clarity, it is preferred that the R and R''' radicals present in the organosiloxy units employed to render the filler hydrophobic be primarily the same as the R radicals found in the polydiorganosiloxanes with which the fillers are mixed. The term "primarily" is intended to mean that minor amounts of the organosiloxy units present on the filler can possess radicals which are not contained in the polydiorganosiloxanes employed while major amounts of such units do contain radicals which correspond with the radicals found in the polydiorganosiloxane. For example, when these fillers are to be used in compositions containing fluorinated polydiorganosiloxanes such as a poly(3,3,3 - trifluoropropyl)methylsiloxane gum, it is preferable to use major amounts of fluorine-containing organosilicon hydrophobing compounds such as $\{(CH_3)_2(CF_3CH_2CH_2)Si\}_2NH$ and minor amounts of compounds which do not contain fluorinated radicals such as $(CH_3)(C_2H_3)Si(OCH_3)_2$ to render the filler hydrophobic to ensure that the polydiorganosiloxane and the surface-treated silica filler form compatible mixtures. When organosilicon hydrophobing agents such as hexamethyldisiloxane are employed which require hydrolysis to liberate a reactive species such as $(CH_3)_3SiOH$ and, as in the case of hexamethyldisilazane, to liberate a volatile base, there should be a sufficient amount of water present to hydrolyze such compounds in addition to the amount of water required to hydrolyze the alkyl silicate.

Basic catalysts which are suitable for use in the present invention are those compounds which are capable of rendering the mixture alkaline. Examples of such catalysts are inorganic compounds such as ammonia, ammonium hydroxide, ammonium carbonate, sodium hydroxide, and lithium hydroxide, organic compounds such as amines such as ethylamine, dimethylamine, diethylamine, triethylamine, and N,N-dimethylethanolamine, or alkali salts of carboxylic acids such as sodium acetate, ammonium acetate and sodium formate. Also useful as suitable basic catalysts are the organosilazane compounds suggested above as being useful as organosilicon hydrophobing compounds. Thus, a sufficient amount of a compound such as hexamethyldisilazane can serve as both a basic catalyst and as an organosilicon hydrophobing compound. It is preferable to use volatile basic compounds such as ammonia, ammonium hydroxide, and/or compounds which generate volatile bases such as hexamethyldisilazane to avoid introducing undesirable ionic salts into the silica filler-containing composition. Strong bases such as sodium hydroxide can affect the structure of the silica and render silica filler produced in this manner non-reinforcing. It is believed that the presence of alcohols retards this effect, but it is preferable to avoid the use of such strongly basic compounds. There should be a sufficient amount of at least one basic catalyst present to result in a silica filler-containing composition with a pH of greater than 7. Typically, the pH is in the range of about 9 to 12.5.

The preferred method for producing silica fillers useful in the present invention using alkaline hydrolysis of an alkyl silicate involves mixing the water, alcohol and any basic catalyst not provided by the organosilicon hydrophobing compound together with stirring. The organosilicon hydrophobing compound or (compounds) is then added and allowed to stir for a short time. The alkyl silicate is then rapidly added to the stirring mixture to form a silica filler-containing composition. After the addition of the last ingredient, the composition is allowed to age for a sufficient amount of time until a sample of the filler obtained by drying a sample of the above composition is considered to be hydrophobic. Generally, the composition is aged between thirty minutes and twenty-four hours and preferably between thirty minutes and four hours prior to use. Longer periods of aging do not appear to be detrimental to the optical clarity of

elastomers prepared from the filler compositions provided that the filler composition is not allowed to become drying prior to the elastomer preparation.

Alternatively, the organosilicon hydrophobing compound(s) can be mixed together with the alkyl silicate to form a solution and that solution can be rapidly added to the remaining ingredients as described above to form a hydrophobic reinforcing silica filler-containing composition which is then aged as above. This method of mixing is preferred when the organosilicon hydrophobing compound is the sole source of basic catalyst.

The mixing and aging steps in both methods can be carried out at room temperature or at temperatures up to the boiling point of the volatile portion of the composition. Preferably, the mixing and aging steps take place at room temperature. These fillers will generally contain up to about 3 percent by weight of alkoxy groups, methoxy groups in the case of methyl orthosilicate, based upon the total weight of filler.

During the aging step, the composition may gel. However, the silica filler-containing composition itself need not be in the form of a wet, gelled filler composition. It was found that if a stirring means which possessed a sufficient amount of torque to break up gel particles as they were formed, such as a gear-driven mechanical stirrer, was employed both during the addition of the alkyl silicate and thereafter, the resulting composition remained in a fluid, pourable state for a sufficient amount of time to enable the composition to be pumped through pipes to the site where it was to be incorporated into the polydiorganosiloxane even though in the absence of such stirring means, the same formulation would result in a wet, gelled filler composition. Either the wet, gelled filler compositions or the wet, fluid filler compositions can be compounded with the polydiorganosiloxanes as hereinafter described. The term "wet" is intended to mean a gel in the form of a hydrogel or an organogel. The volatile portion of the composition can be replaced by another liquid such as toluene as long as the process used to replace the volatile portion does not cause the filler particles to agglomerate and result in a filler which will not form optically clear compositions. Typically, the actual non-volatile solids content of the gelled or fluid hydrophobic reinforcing silica filler-containing compositions is in the range of from 5 to 35 percent by weight.

Further details concerning the methods of formulating, processing and incorporating hydrophobic reinforcing silica fillers of this type into polydiorganosiloxanes can be found in US—A—4344800 entitled "Method for Producing Hydrophobic Reinforcing Silica Fillers and Fillers Obtained Thereby" to Michael A. Lutz.

In addition to the above filler preparation method, any method which will render the silica filler hydrophobic prior to the time when substantially all of the filler particles have aggregated to a particle size which is smaller than about 4,000 Angstroms and which method results in a hydrophobic reinforcing silica filler possessing the above described physical characteristics can be used to prepare fillers which may find use in optically clear compositions of the present invention having the above-described haze and luminous transmittance values.

The filler and one or more polydiorganosiloxanes can be mixed together using mixing apparatus and techniques which are well known in the art such as bread dough mixers, twin-screw mixers or two-roll mills. The mixing should be as homogeneous as possible to obtain optimum optical clarity. It is very important to operate under conditions which are as free from contamination by foreign materials as possible because dirt and lint seriously increase haze values and decrease luminous transmittance values. It is best to add the silica filler to the polydiorganosiloxane as a wet composition rather than as a dry powder, especially when the silica filler is obtained by the alkaline hydrolysis of an alkyl silicate, particularly methyl orthosilicate. Wet compounding minimizes the formation of large agglomerates, that may be difficult to properly disperse into particles which are sufficiently small (primary particles and aggregates thereof) to result in optically clear compositions.

Once the filler and polydiorganosiloxane have been mixed, various well-known means such as heating the mixture to 105—110°C as the mixing operation is continued or heating the mixture under reduced pressure while mixing is continued can be employed to remove the volatile portion of the mixture. It is desirable that the filler be homogeneously mixed with the polydiorganosiloxane prior to removing the volatile portion of the mixture.

Therefore, one preferred method for producing optically clear compositions of the present invention comprises the steps of (I) mixing 100 parts by weight of at least one polydiorganosiloxane as defined above with a sufficient amount of a wet, gelled filler composition containing from 15 to 120 parts by weight of a hydrophobic reinforcing silica filler as defined above to form a mixture and (II) removing the volatile portion of said mixture to obtain an optically clear composition curable to an elastomer.

An alternative preferred method for producing optically clear compositions of the present invention comprises the steps of (I) mixing 100 parts by weight of at least one polydiorganosiloxane as defined above with a sufficient amount of a wet, fluid filler composition containing a hydrophobic reinforcing silica filler as defined above to form a mixture and (II) removing the volatile portion of said mixture to obtain an optically clear composition curable to an elastomer. Both methods can additionally comprise a third step (III) of mixing at least one curing agent into the composition.

Once the filler and polydiorganosiloxane have been homogeneously blended and any volatiles are removed to form an optically clear composition, the composition can be cured to form an optically clear

elastomer. The terms "cured" and "curing" as used in describing the present invention include any method which can be used to vulcanize or cross-link the polydiorganosiloxanes present in the composition to form optically clear, useful elastomeric products. It is well within the ability of one skilled in the art to select one or more polydiorganosiloxanes which, when mixed with the above-described silica fillers, can be cured to form optically clear elastomeric products by such means as electron beam irradiation or ultraviolet light. The compositions can additionally contain one or more curing agents which aid in forming cured elastomeric products possessing the desired haze and luminous transmittance values. Examples of curing agents are organic peroxides which are suitable for vulcanizing silicone rubber such as benzoyl peroxide, tertiarybutyl perbenzoate, 2,4-dichlorobenzoyl peroxide, dicumyl peroxide, ditertiarybutyl peroxide and 2,5 - bis(t - butylperoxy) - 2,5 - dimethylhexane or curing agents which promote the room temperature vulcanization of polydiorganosiloxanes upon exposure to moisture such as the combination of (a) metal salts of carboxylic acids such as stannous octoate with (b) a relatively minor amount of an alkyltrialkoxysilane or ethyl orthosilicate where the polydiorganosiloxane comprising 100 parts by weight the mixture is a hydroxy-endblocked polydiorganosiloxane. Other curing agents which promote room temperature vulcanization of polydiorganosiloxanes such as those employing metal catalysts in combination with acetoxy-functional silanes or acetamido-functional silanes can be used as long as useful, optically clear elastomeric products can be obtained. Another useful combination of curing agents is exemplified by U.S. Patent No. 2,823,218 issued February 11, 1958 to Speier et al. and by U.S. Patent No. 3,697,473 issued October 10, 1972 to Polmanteer et al. Both of these patents teach the various types of organosiloxane compounds containing silicon hydride radicals, platinum catalysts, catalyst inhibitors, and vinyl-containing polydiorganosiloxanes which can be employed by those skilled in the art to produce the optically clear compositions of the present invention. The Polmanteer patent is also incorporated by reference to illustrate one type of composition which can contain silica fillers which are cured to elastomeric products through the use of curing agents which employ the platinum-catalyzed addition of a silicon hydride radical to a silicon-bonded vinyl radical. Other methods for curing the optically clear compositions of the present invention will be apparent to those skilled in the art. The method of curing employed is not critical as long as the resulting product is an optically clear, useful elastomeric product. Surface defects such as fingerprints or those due to mold indentations or scratches on the surfaces of a molded article such as a lens for a gas mask can scatter light and result in a haze value of greater than 4% per 2.54 mm thickness even though the cured elastomer itself has a haze value of less than 4 percent. Therefore, it is preferable to check the optical clarity of a uniform 2.54 mm thickness of the uncured composition to obtain a reliable measure of the haze value and optical transmission value of the compositions.

The compositions of the present invention can also include minor amounts of additives such as compounds which promote adhesion to various substrates (such as gamma-glycidoxypropyltrimethoxysilane as taught in U.S. Patent No. 4,087,585, issued May 2, 1978, to Schulz or ethyl polysilicate as taught in U.S. Patent No. 3,312,587, issued April 4, 1967, to Wilson), heat stability additives, ultraviolet light absorbing compounds, plasticizers, dyes which color, but do not increase the haze value of, the compositions and products, plasticizers and other well-known additives provided that such additives do not result in compositions possessing haze values of greater than 4 percent and luminous transmittance values of at least 85 percent per 2.54 mm thickness.

The curing of said compositions can be accomplished in any well-known manner such as by heating alone, by heating under pressure, mixing a catalyst with the remainder of the composition at room temperature or above, exposing the compositions to the action of moisture or by simply exposing the compositions to radiation in any apparatus or device such as a mold which will result in a cured elastomer having the desired shape. The cured products are silica-reinforced silicone elastomers useful as optically clear articles such as lenses for gas masks, interlayers for windshields, clear tubing, optically clear adhesives or sealants, and when the cured elastomer itself is biocompatible with an animal or human body, the elastomers may be used to produce prosthetic devices such as mammary implants, corneal prostheses such as intraocular lenses and contact lenses.

The following examples are intended as being illustrative of the present invention. All parts and percentages reported in the following examples are by weight unless otherwise indicated. In all cases where the surface-treated silica fillers were prepared by the hydrolysis of an alkyl silicate, the silica filler exhibited 100% hydrophobicity according to the water flotation test described in the patent application to Lutz, supra. That is, 100% of a 0.3 g sample of the filler (dried on a hot-plate at 250°C for 30 minutes) floated at the top of 2.5 cc of water after the filler and water were vigorously shaken together.

The following polydiorganosiloxanes were used to prepare the compositions described in the examples:

Gum A — A dimethylvinylsiloxy-endblocked polydiorganosiloxane gum consisting essentially of 99.86 mole percent of dimethylsiloxane units and 0.14 mole percent of methylvinylsiloxane units based upon the total moles of diorganosiloxane units present, the ratio of total moles of organic substituents to silicon atoms (R/Si ratio) being about 2.00 and the Williams plasticity (4.2 g sample) of Gum A being in the range of 55—65 mils (1.40—1.65 mm) and a refractive index of about 1.403 at 25°C, Sodium D wavelength (this temperature and wavelength was used to obtain all the refractive index values which are hereinafter reported.

Gum B — A dimethylvinylsiloxy-endblocked polydiorganosiloxane gum consisting essentially of 88.5

mole percent of dimethylsiloxane units, 11.0 mole percent of phenylmethylsiloxane units and 0.5 mole percent of methylvinylsiloxane units based upon the total moles of diorganosiloxane units present, the Williams plasticity of Gum B being in the range of 50—70 mils (1.27—1.78 mm). The R/Si ratio was about 2.00 and had a refractive index of about 1.430.

Gum C — A hydroxy-endblocked polydiorganosiloxane gum consisting essentially of 99.5 mole percent of 3,3,3-trifluoropropylmethylsiloxane units and 0.5 mole percent of methylvinylsiloxane units based upon the total moles of diorganosiloxane units present. The Williams plasticity (5.6 g sample) of Gum C was 102 mils (2.59 mm) and had a refractive index of 1.3803. The R/Si ratio was about 2.00.

Gum D — A dimethylvinylsiloxy-endblocked polydimethylsiloxane gum having a Williams plasticity (4.2 g sample) in the range of 55—65 mils (1.40—1.65 mm). The refractive index of the gum was about 1.403 and the R/Si ratio was about 2.00.

Examples 1—8

Examples 1—8 consist of compositions containing a polydiorganosiloxane gum and various types of hydrophobic reinforcing silica fillers which were prepared for the purpose of measuring the luminous transmittance and the haze values of each composition at room temperature (about 22°—23°C) according to the procedure described in ASTM D1003-61. Examples 5—8 are comparative examples.

The silica filler used in Examples 1 and 2 was prepared by mixing 410 milliliters (ml) of methanol, 75.4 ml of concentrated aqueous ammonium hydroxide (density ~0.9 g/ml, ~28.4% $NH_3$ content, the symbol "~" means approximately) and 30.8 ml of water together at room temperature in a bottle containing a magnetic stirring bar. Then 60 ml of hexamethyldisilazane was added and the mixture was allowed to stir an additional 10 minutes before 120 ml of methyl orthosilicate was rapidly added. The mixture was then allowed to stir at room temperature until the mixture gelled and the magnetic stirring bar stopped. The gelled silica filler-containing composition was allowed to age for about three hours after the addition of the methyl orthosilicate before it was used to prepare the composition of Example 1. The resulting wet, gelled filler composition (hereinafter Filler Composition I) had a theoretical $SiO_{4/2}$ content of about 8% and contained approximately 15.2 percent by weight of a hydrophobic reinforcing silica filler.

The composition of Example 1 was prepared by slowly incorporating 165 g of Filler Composition I to 50 g of Gum A using a clean two-roll mill. The volatiles were removed by hot milling the mixture for 30 minutes at 105°C—110°C. The mixture was then cooled to room temperature. A sheet of the milled composition was removed from the two-roll mill and pressed to a uniform thickness of 1.90 mm (75 mils) between two clean 10.16 cm×10.16 cm×0.32 cm (4"×4"×0.125", where the symbol " is inches) plates of glass. Two plates of clean glass were placed together (0.64 cm thickness) and the haze value was found to be 0.6% and the luminous transmittance value was 91.9%. The presence of an air space between the glass plates may affect these values. Some lint or dust particles were observed in the transparent layer as were a small amount of what appeared to be gel particles or filler agglomerates.

Example 2 was prepared using 165 g of Filler Composition I which had been aged about 24 hours at room temperature and 40 g of Gum A. The same mixing technique used in Example 1 was employed except the filler composition and gum were milled together without heating the rolls for a longer period of time prior to the devolatization step to ensure that the gelled filler was adequately mixed with the gum because the filler composition contained a large amount of liquid. After being pressed between two clean glass plates as above, this composition was visually observed to contain fewer gel particles than Example 1.

The compositions of Examples 3 and 4 were prepared using Filler Composition II which was prepared according to the same procedure employed in preparing Filler Composition I using the following formulation: 425 ml methanol, 94 ml concentrated aqueous ammonium hydroxide, 4 ml water, 32 g of a solid organosilicon hydrophobing compound consisting principally of hexamethylcyclotrisiloxane (this was used in place of the hexamethyldisilazane in Filler Composition I) and 120 ml methyl orthosilicate.

The composition of Example 3 was prepared using 165 g of Filler Composition II which had been aged for twenty-four hours at room temperature and 50 g of Gum A. This composition was milled together on a two-roll mill and immediately hot-milled for 30 minutes at 105°—110°C to remove volatile material. A 1.9 mm sample exhibited approximately the same amount of gel particles as did Example 1. Example 4 was prepared using the same formulation as Example 3, but employed the milling procedure described in Example 2. This composition exhibited fewer gel particles than that of Example 3, but had a slightly higher haze value (see Table I). The higher haze value could be due to the presence of more lint or dirt particles in Example 4. However, the examples demonstrate that the filler and gum should be mixed or blended as homogeneously as possible to obtain compositions with optimum optical clarity.

The composition of Example 5 was prepared by alternately adding small increments of a total of 3 grams of hexamethyldisilazane and a total of 20 g of a reinforcing silica filler powder reportly having a surface area of about 255 $m^2/g$ (Cab-O-Sil® MS-75, product of the Cabot Corporation, Boston, Mass. 02110) to 40 g of Gum A on a cold two roll mill until all of the filler and hexamethyldisilazane was added to the gum. Then 1 g of water was added to the gum-filler mixture and it was hot-milled for 30 minutes at 105°—110°C to produce a composition containing a surface-treated filler which was then pressed between two clean glass plates to a thickness of 1.90 mm. The resulting composition contained about 54 parts of filler solids per 100 parts of Gum A. The amount of filler was estimated by assuming that the original

amount of silica added was about 92% of the amount of the treated filler (this assumption was also used in reporting the amount of filler in Example 12).

The composition of Example 6 was prepared by slowly adding 9 g of a hydrophobic reinforcing silica filler powder to 30 g of Gum A on a cold two-roll mill. When all of the filler was added, the mixture was hot-milled 15 minutes at 105—110°C, cooled and pressed between two clean glass plates to a uniform thickness of 2.54 mm. The silica powder used in this Example was prepared according to the general procedure of refluxing 320 ml of a deionized sodium silicate solution (calculated to contain the equivalent of 32 g $SiO_{4/2}$ units), 300 ml of a colloidal silica sol containing 48 g $SiO_2$, 180 ml concentrated hydrochloric acid, 100 ml water and 2 g iron(III) chloride for 3 hours. After 3 hours, 300 ml isopropanol and 60 ml trimethylchlorosilane were added and the mixture was allowed to stir for one half hour. Then 700 ml of toluene was added and the surface-treated silica transfers to the organic toluene phase. The toluene phase containing the silica was recovered, azeotroped to remove water and the silica product obtained from the toluene phase was then dried.

The composition of Example 7 was prepared by first stirring 100 g of a reinforcing silica filler powder (fume silica) which reportedly had a surface area of about 400 $m^2/g$ (Cab-O-Sil® S-17, a product of the Cabot Corporation, Boston, Mass. 02110) into 1000 g of toluene using a nitrogen purge. The slurry that formed was heated to 60°C and then 20 g of hexamethyldisilazane and 1 g of water was added. The viscosity of the slurry significantly decreased within about three minutes after the addition of the latter two ingredients and the slurry was allowed to stir for an additional 30 minutes after the viscosity change. The slurry was then placed in a flat glass dish and allowed to dry overnight in an air hood. The next day, the remainder of the volatile materials were removed by drying the filler in an air circulating oven at 125°C. Twenty-five grams of the resulting filler was compounded with 50 g of Gum A on a two-roll mill. After all the filler was added and a cohesive sheet had formed, the composition was hot-milled for 30 minutes at 105°—110°C. Then a uniform 2.54 ml thickness of the resulting composition was pressed between two clean glass plates.

The composition of Example 8 was prepared by mixing 50 g of Gum A, 5 g of hexamethyldisilazane and 2 g of water together on an unheated two-roll mill. Then 25 g of the same type of reinforcing silica filler powder used in Example 7 was slowly added to the above mixture. After all of the filler was added and a cohesive sheet had formed, the composition was hot-milled for 30 minutes at 105°—110°C. Then a uniform 2.54 mil thickness of the resulting composition was pressed between two clean glass plates.

The luminous transmittance and haze values for each composition were measured using the previously described hazemeter. When 1.90 mm thicknesses were employed (Examples 1—5), the value of the haze at 2.54 mm was calculated for the purpose of comparing all the samples. The haze values reported are the average of four measurements. The results are summarized in Table I. Examples 1—4 gave haze values of less than 4% using polydiorganosiloxane gums where the organic radicals present were primarily methyl radicals and a small percentage of vinyl radicals while Examples 5—8 had haze values of greater than 8 using the same type of gum even though several different filler treatment methods and several different silica fillers were employed.

Example 9

Example 9 demonstrates the production of an optically clear composition composed of a fluorine-containing polydiorganosiloxane gum and a hydrophobic reinforcing silica filler surface-treated with fluorine-containing organosiloxy units wherein the refractive index of the gum (Gum C — R.I.=1.3803) was not closely matched with the refractive index of the filler.

The filler used in Example 9 was prepared according to the procedure previously described for Filler Composition I and had the following formulation: 88.3 ml methanol, 12.6 ml water, 7.5 ml concentrated aqueous ammonium hydroxide, 20 ml sym - tetramethyl - bis - 3,3,3 - trifluoropropyldisilazane and 60 ml methyl orthosilicate. This wet, gelled filler composition was aged for two days at room temperature prior to use, contained 23% filler solids and about 14% theoretical $SiO_{4/2}$ content based upon the total weight of the filler composition and is hereinafter referred to as Filler Composition III.

The composition of Example 9 was prepared using a filler loading level of 55 parts of filler solids per 100 parts of Gum C by employing the milling procedure used in Example 2 to blend 72 g of Filler Composition III with 30 g of Gum C. The filler and gum were adequately mixed because the sample had good optical clarity (little noticeable haze) at 105°—110°C when viewed between the two rollers just prior to being removed from the mill. This visual observation was experimentally confirmed because a uniform 1.9 mm thickness of this composition between two glass plates had a luminous transmittance value of 88.0% and a haze value of 2.5% which was calculated to be a haze value of 3.3% for a 2.54 mm thickness. A simple method to predict whether or not the filler and gum have been properly or homogeneously blended and/or to estimate whether or not a particular filler composition will result in optically clear compositions is to observe the visual clarity of a sample between the rolls of a two-roll mill as it is being milled. If the composition is optically clear at 105°—110°C, then it can be expected to have good optical clarity at room temperature. The final test, however, is to instrumentally measure the luminous transmittance and haze value of the composition as described above.

Example 10

This example demonstrates the effect of filler loading on the luminous transmittance and haze values of the compositions of the present invention. The filler used in these examples (Filler Composition IV) was surface-treated using a hydrophobe agent prepared by refluxing a mixture of 100 g of a solid hydrophobe agent consisting principally of hexamethylcyclotrisiloxane, 49.5 g of methanol and 0.5 g of an ammonia gas/methanol solution (~0.11 g $NH_3$/g of solution) for 2 hours (hereinafter referred to as Hydrophobe Agent Solution A). The hydrophobic reinforcing silica filler-containing composition was prepared using the following formulation: 111 ml methanol, 45 ml concentrated aqueous ammonium hydroxide, 51 ml of the ammonia gas/methanol solution described above, 54 ml of Hydrophobe Agent Solution A and 120 ml of methyl orthosilicate. The filler composition was prepared by mixing the methanol, concentrated aqueous ammonium hydroxide and ammonia gas/methanol solution together and then adding the Hydrophobe Agent Solution A. When the last addition was made, the methyl orthosilicate was rapidly added with stirring and the mixture was allowed to stir until gelation took place. The wet, gelled filler composition was then stored about 4 weeks at room temperature prior to use. The wet, gelled filler composition obtained had a solids content of 25.3%. The amounts of Gum A and filler used are tabulated in Table II and each sample was prepared according to the procedure used in Example 4. The luminous transmittance and haze values are for 2.54 mm thick samples.

In preparing these samples the last sample containing 90 phg (parts of filler solids per 100 parts of gum) of filler had the highest viscosity and required more handling in the laboratory to produce a uniform sheet. The sample containing 30 phr did not form a sheet on the two-roll mill as well as the others and difficulty was also experienced in preparing a uniform sheet. It has a haze value of greater than 4% and is therefore a comparative example. Additional handling results in the inclusion of more foreign matter such as dust which increases the haze value. A one to two percent difference in haze value between compositions having a similar or identical formulation can be due to the presence of such foreign matter. The sample containing 60 phr appeared to contain an optimum level of filler and was the easiest of the three to handle. It therefore offered the least amount of opportunity for contamination. All of the above samples contained some visible particles of foreign material which can be eliminated when such samples are compounded under optimum conditions of cleanliness such as those conditions used in preparing opthalmic lenses or medical grade elastomers. This example demonstrates that optically clear compositions can be prepared over a wide range of filler loading levels.

Examples 11—12

These examples demonstrate the difference between an optically clear composition which is obtained by matching the refractive index of a gum to that of the silica filler and an optically clear composition of the present invention which does not require refractive index matching. Example 11 was prepared by blending 30 g of Gum B with 71.1 g of Filler Composition V (18.0 g filler solids) on a two-roll mill until the sample was well-mixed and then the sample was hot-milled at 105°—110°C for 15 minutes to remove volatile materials. The composition of Example 11 contained a filler loading of 60 phr.

Filler Composition V employed two hydrophobe agents to surface-treat the filler surface and had the following formulation: 111 ml methanol, 45 ml concentrated aqueous ammonium hydroxide, 51 ml of the ammonia gas/methanol solution of Example 10, 54 ml Hydrophobe Agent Solution A, 48 drops (~0.7 g) of a liquid hydrophobe agent consisting principally of 1,3,5 - trimethyl - 1,3,5 - trivinylcyclotrisiloxane and 120 ml of methyl orthosilicate. Filler Composition V was prepared using the same procedure as that described for Filler Composition IV except that the 48 drops of the liquid hydrophobe agent was added after the addition of the Hydrophobe Agent Solution A and prior to the addition of the methyl orthosilicate. Thus, the hydrophobe agent mixture used to surface-treat this filler contained approximately 2 mole percent of methylvinylsiloxane units based upon the total moles of siloxane units contained in both hydrophobe agents to improve the properties of the elastomer obtained upon curing the elastomer composition. The wet, gelled filler composition contained about 14% by weight of theoretical $SiO_{4/2}$ units and about 23% filler solids.

Example 12, a comparative example, was prepared according to the following general procedure. One hundred parts of Gum B is mixed together with 18.5 parts of hexamethyldisilazane and 4 parts of water in a bread dough mixer. When the mixing is complete, a total of 55 parts of a reinforcing silica filler powder (fume silica) which reportedly had a surface area of about 400 $m^2$/g (Cab-O-Sil® S-17, a product of the Cabot Corporation, Boston, Mass. 02110) was incrementally added with mixing over a period of about 2 hours until all the filler was incorporated into the gum. Mixing is then continued as the mixture is heated to 225°C under nitrogen purging. At 225°C, mixing is continued under vacuum conditions for three hours and then the mixture is cooled to room temperature. The resulting composition contained about 60 parts of filler solids per 100 parts by weight of Gum B. A sample of a composition prepared in the above manner was then hot-milled on a two-roll mill for 15 minutes to remove volatile materials before the following evaluations were made.

As noted in Example 9, the clarity of the sample can be observed while it is being milled simply by looking between the gap between the rollers. Since the mill is heated by steam, one can observe the clarity of the sample as it is heated up to about 150°C. The refractive index of a polydiorganosiloxane gum is known to change with temperature. As a sample of an optically clear composition which relies on refractive

index matching for its optical clarity is heated, the haze value of the sample should increase as the difference between the refractive index of the gum and filler increases with increasing temperature. This change in haze value is visible to the naked eye and thus the clarity of the compositions of Example 11 and 12 were noted at three temperatures during the hot-milling of each sample. The filler and gum compositions prepared above were each placed on a two-roll mill at room temperature and the haze of each sample in the gap of the rollers at room temperature was visually rated on a scale of 1 to 6 where a rating of 1 is the visually apparent haze of the composition of Examples 11 (3.17% haze value at 2.54 mm thickness) and 12 (4.9% haze value at room temperature and where a rating of 5 is the visually apparent haze of the composition of Example 8 (8.6% haze value) at room temperature. The steam was turned on and the sample was hot-milled over a period of 15 minutes. The clarity of each sample was visually evaluated when the temperature of the rollers reached about 105°C and again at a temperature of a little more than 150°C. The results are as follows:

| | Visual haze rating | | |
|---|---|---|---|
| | Room temperature | 105°C | >150°C |
| Example 11 | 1 | 1 | 2—3 |
| Example 12 | 1 | 4 | 6 |

As the visual observations demonstrate, the compositions of the present invention have a much lower increase in haze with increasing temperature than a composition which requires refractive index matching of the gum and fume silica filler to obtain optical clarity at room temperature.

To further measure the increase in haze, samples consisting of uniform 2.54 mm sheets of each composition pressed between clean glass plates were prepared and the luminous transmittance value and the haze value of each sample was measured at room temperature (R.T.). One sample of each composition was placed in a 100°C oven until the temperature of the sample reached 100°C. One sample was then quickly removed from the oven and the luminous transmittance of the sample was measured 30 seconds after being removed from the oven. The haze value measurement was then made and completed 60 seconds after the sample was removed from the oven. Both samples were evaluated in this manner and were believed to be at about 100°C when the measurements were taken. The results are shown below:

| | Luminous transmittance (%) | | Haze value (%) | |
|---|---|---|---|---|
| | (R.T.) | (~100°C) | (R.T.) | (~100°C) |
| Example 11 | 88.4 | 88.2 | 3.1 | 3.1 |
| Example 12 | 86.8 | 84.4 | 4.9 | 7.0 |

The above results show the advantages possessed by compositions of the present invention. The luminous transmittance and haze value of the composition of the present invention (Example 11) does not appear to change in a significant manner although the sample (Example 12) which relies upon refractive index matching does. This property can be valuable where an optically clear composition is desired for use as an optically clear interlayer in a windshield for a high speed aircraft where the windshield heats up due to the passage of air molecules over the windshield at supersonic speeds.

Examples 13—22

These examples demonstrate the variation in physical properties of elastomers obtained by curing compositions of the present invention. The fillers used in these compositions were surface-treated to render the filler hydrophobic. A combination of hydrophobe agents was employed wherein the combination was varied to result in a hydrophobe agent containing from 0.5 to 8 mole percent of methylvinylsiloxane units and from 92 to 99.5 mole percent of dimethylsiloxane units. The mole percentages were based upon the total moles of diorganosiloxane units calculated to be initially present in the combination of hydrophobe agents prior to the addition of the methyl orthosilicate. The fillers were prepared using the same procedure and formulation as that employed in Filler Composition V except that the amount of 1,3,5 - trimethyl - 1,3,5 - trivinylcyclotrisiloxane used in each filler composition was as follows: Examples 13 and 18 — 12 drops (~0.18 g), Examples 14 and 19 — 24 drops (~0.36 g), Examples 15 and 20 — 48 drops (0.72 g), Examples 16 and 21 — 96 drops (~1.4 g) and Examples 17 and 22 — 192 drops (~2.8 g). thus, the methylvinylsiloxane content of each filler in mole percent was 0.5, 1, 2, 4 and 8 respectively. The fillers were aged at least 24 hours at room temperature prior to use. The solids content for each filler was determined by heating the filler in a 125°C oven for 2 hours and the average solids content for the five filler containing compositions was 25.3%.

To obtain a filler loading level of 60 parts of silica filler solids per 100 parts by weight of polydiorganosiloxane gum used, 71 g of the wet filler composition was added to 30 g of gum. In Examples 13—17, Gum D was used while in Examples 18—22, Gum A was used. The procedure used for each example was to place 30 g of gum on a two-roll mill at room temperature and then incrementally add a total of 71 g of filler to the gum. When the filler was thoroughly mixed into the gum, milling was continued as the rollers were heated to about 105°—110°C. When the mixture became clear, the hot-milling was continued for another 15 minutes to devolatilize the mixture. The mill was then cooled to room temperature and 18 drops of 2,5 - dimethyl - 2,5 - di(t - butylperoxy)hexane catalyst was added to each sample (one part of catalyst per 100 parts of gum). Each sample was pressed into a standard 6.35 cm×13.97 cm×0.16 cm molding chase and heat/press cured for 15 minutes at about 170°—175°C. The cured elastomers were then post-cured by heating them in an oven for 4 hours at 200°C.

The average physical properties of the cured elastomers were evaluated using the following ASTM procedures: ASTM D412 — ultimate tensile strength (strength), elongation at break and modulus (or tensile stress) at 100% elongation and ASTM D2240 — durometer. The "Trouser Leg Tear Value" of each sample was measured following the method of Greensmith and Thomas as described in "Rupture of Rubber III", J. Polymer Science, Interscience Publications, New York, N.Y., *18*, pp. 189—200 (1955).

The value reported is the average of two measurements and is believed to be a more reproducible method of evaluating the tear value of cured elastomers than the more commonly used Die B tear test outlined in ASTM D624. The results are reported in Table III.

When the above compositions are homogeneously blended together and are reasonably free of foreign matter, the compositions are optically clear. The refractive index of a filler having the same formulation as that used in Examples 15 and 19 was found to be 1.428±0.002 and the refractive index of Gum D is about 1.403.

A composition having the same formulation as that used in Example 17 was prepared according to the mixing procedure employed in Example 4, but was hot-milled for 1 5minutes at 105°—110°C. This optically clear composition had a luminous transmittance value of 87.1% and a haze value of 2.5% measured using a 2.54 mm thickness of the composition between two sheets of glass.

Example 23

In this example, the luminous transmittance and haze values of an elastomer obtained by curing an optically clear composition of the present invention were measured. The optically clear composition used had the same formulation as that of Example 17 and contained the same level of curing catalyst. A sample of this composition was pressed between two sheets of glass in a 10.16 cm×10.16 cm×0.16 cm molding chase in a molding press to form a uniform sheet. To provide a uniform molding surface which was as free of surface defects as possible and which was capable of being easily stripped from the surfaces of the cured elastomer, a sheet of tetrafluoroethylene fluorocarbon polymer film (Teflon® film — a registered trademark of E.I. duPont de Nemours, Wilmington, Del. 19898) was placed between each glass plate and the optically clear composition such that only the film touched the composition. The heat was turned on and the sample was heated under pressure at a rate of about 5°C per minute until the temperature reached 170°C. The sample was cured at 170°C for 15 minutes and the sample was then cooled to room temperature at the same rate it had been heated. One of the glass plates cracked during the heating and left a hairline impression on the sample, but otherwise the molded sample had an excellent surface.

The cured elastomer sheet had an average thickness of about 1.65 mm (65 mils). The haze value of the 1.65 mm sheet itself was 2.5% and the luminous transmittance of the sheet was 93.6% — no glass plates were used in making these measurements. The calculated haze value for a 2.54 mm sample is 3.8% which is within the definition of an optically clear cured elastomer of the present invention. A 2.54 mm sheet of cured elastomer of this type could find use as a lens for a protective mask for the face.

Example 24

The hydrophobic reinforcing silica filler used in this Example was prepared according to the procedure previously described for Filler Composition II using the following formulation: 93.7 ml methanol, 18.6 ml water, 7.5 ml concentrated aqueous ammonium hydroxide, 18 g of a solid organosilicon hydrophobing compound consisting principally of hexamethylcyclotrisiloxane and 60 ml methyl orthosilicate. The resulting wet, gelled, silica filler-containing composition contained about 12.5 percent by weight of theoretical $SiO_{4/2}$ units and contained approximately 24 percet by weight of a hydrophobic reinforcing silica filler (hereinafter Filler Composition VI).

To prepare the composition, a sufficient amount of Filler Composition VI was homogeneously blended with Polymer E on a two-roll mill to result in a composition containing 60 parts of filler solids per 100 parts by weight of Polymer E. Polymer E was a methylphenylvinylsiloxy-endblocked polydimethylsiloxane having a viscosity at 25°C in the range of 1.8 to 2.5 Pa · s (pascal · seconds) and an average ratio of organic radicals per silicon atom in the range of 2.006 to 2.007. Polymer E had a much lower viscosity than the gums used in the previous examples. Therefore, a small amount of the wet filler composition was added to thicken the Polymer E sample so that it would form a sheet on the two-roll mill. The remainder of the wet, gelled filler composition was incrementally added and then the composition was hot-milled at about 105°—110°C for 30 minutes to remove volatile material. The composition appeared to be very clear and free

of noticeable haze when viewed between the rolls of the mill. The sample was then cooled to room temperature and the following curing agents were blended into the composition in the following order using the two-roll mill to disperse them: 2.7 parts of Polymer F, 0.2 parts of a platinum catalyst solution and 0.07 parts of 2 - methyl - 3 - butyn - 2 - ol inhibitor compound — these parts are parts by weight per 100 parts by weight of Polymer E. Polymer F was trimethylsiloxy-endblocked polyorganosiloxane having 37.5 mole percent of dimethylsiloxane units and 62.5 mole percent of methylhydrogensiloxane units where the mole percent is exclusive of the trimethylsiloxy units and having a silicon-bonded hydrogen atom content of 0.7 to 0.8 weight percent. The platinum catalyst solution employed was a chloroplatinic acid complex of divinyltetramethyldisiloxane diluted with a sufficient amount of a dimethylvinylsiloxy-endblocked polydimethylsiloxane having a viscosity at 25°C in the range of 0.3 to 0.5 Pa · s to provide 0.7 weight percent platinum. When the above composition is homogeneously blended, an optically clear composition is obtained.

The above composition was heat/press cured in a molding chase for 15 minutes at 170°—175°C. The cured elastomer had the following physical properties — durometer (Shore A) — 48, tensile strength—6.34 MPa, elongation at break — 530% and modulus at 100% elongation — 1.10 MPa. Another sample which was post-cured for an additional 4 hours at 200°F after the above heat/press cure had the following physical properties — durometer (Shore A) — 52, tensile strength — 8.27 MPa, elongation at break — 450% and modulus at 100% elongation — 2.00 MPa. When the cured elastomer obtained from the above optically clear composition is properly molded, an optically clear elastomer is obtained.

TABLE I

| Example | Filler loading* (phr) | Haze value (%) (1.9 mm) | Haze value (%) (2.54 mm) | Luminous transmittance (%) (1.9 mm) | Luminous transmittance (%) (2.54 mm) |
|---|---|---|---|---|---|
| 1 | 50 | 2.58 | 3.43** | 88.0 | — |
| 2 | 60 | 2.03 | 2.71** | 87.8 | — |
| 3 | 50 | 1.53 | 2.03** | 88.2 | — |
| 4 | 50 | 2.13 | 2.83** | 87.5 | — |
| 5 | 54 | 11.2 | 14.9** | 81.9 | — |
| 6 | 30 | — | 13.0 | — | 82.8 |
| 7 | 50 | — | 10.2 | — | 80.1 |
| 8 | 50 | — | 8.6 | — | 85.4 |

* — Parts by weight of filler per 100 parts by weight of gum.
** — Calculated values.

TABLE II

| Filler loading (phr)* | Gum A (g) | Filler composition IV (g) | Luminous transmittance (%) | Haze value (%) |
|---|---|---|---|---|
| 30 | 30 | 35.6 | 86.1 | 4.3 |
| 60 | 30 | 71.1 | 87.5 | 2.5 |
| 90 | 30 | 106.7 | 86.0 | 3.9 |

* — Parts of filler solids per 100 parts of Gum A.

TABLE III

| Example | Composition of hydrophobe agent[1] | Tensile strength (MPa)[2] | Elongation at break (%) | Modulus at 100% elongation (MPa)[2] | Durometer (shore A) | Trouser leg tear value (kN/m)[3] |
|---|---|---|---|---|---|---|
| 13 | 0.5 | 9.62 | 1035 | 0.86 | 51 | 13.1 |
| 14 | 1 | 11.34 | 905 | 1.21 | 58 | 11.9 |
| 15 | 2 | 10.20 | 770 | 1.59 | 60 | 12.1 |
| 16 | 4 | 9.31 | 605 | 2.55 | 65 | 15.4 |
| 17 | 8 | 7.10 | 365 | 3.31 | 75 | 7.0 |
| 18 | 0.5 | 11.17 | 570 | 1.93 | 62 | 9.4 |
| 19 | 1 | 8.14 | 430 | 2.10 | 64 | 11.6 |
| 20 | 2 | 8.07 | 345 | 2.62 | 68 | 11.7 |
| 21 | 4 | 8.62 | 300 | 3.86 | 71 | 4.6 |
| 22 | 8 | 6.17 | 110 | 5.93 | 80 | 0.4 |

1) Mole percent of methylvinylsiloxane units based on total moles of diorganosiloxane units.
2) MPa is megapascals (6.895 megapascals (MPa)=1,000 pounds per square inch (p.s.i.)).
3) kN/m is kiloNewtons per meter (175 kiloNewtons/meter (kN/m)=1,000 pounds per inch (p.p.i.)).

**Claims**

1. An optically clear composition curable to an elastomer characterized by:

(A) 100 parts by weight of at least one polydiorganosiloxane consisting essentially of siloxane units selected from the group consisting of siloxane units of the average unit formula

$X_aR_bSiO_{\frac{4-a-b}{2}}$ and $X_aR_c$ 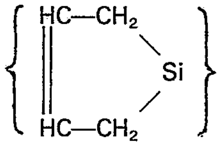 $O_{\frac{2-a-c}{2}}$

wherein each R radical is selected from the group consisting of alkyl radicals of from 1 to 6 inclusive carbon atoms, cyclohexyl radicals, phenyl radicals, halogenated alkyl radicals of from 1 to 10 inclusive carbon atoms and alkenyl radicals of from 2 to 6 inclusive carbon atoms, each X being selected from the group consisting of hydroxyl radicals, hydrogen radicals and alkoxy radicals of from 1 to 6 inclusive carbon atoms, at least 50 percent of the total amount of R radicals and

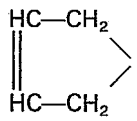

radicals present in said polydiorganosiloxane being methyl radicals, a having a value of from 0 to 1 inclusive, b having a value of from 1 to 3 inclusive and c having a value of from 0 to 1 inclusive, the sum of a+b having a value of from 1 to 3 inclusive, the sum of a+c having a value of from 0 to 1 inclusive, the values of a, b and c being such that the ratio of total R radicals and

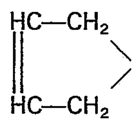

radicals to total silicon atoms present in said polydiorganosiloxane is in the range of from 1.98/1 to 2.02/1 inclusive, said polydiorganosiloxane having a viscosity of at least 0.1 pascal · seconds at 25°C, and

(B) 15 to 120 parts by weight of a hydrophobic reinforcing silica filler consisting essentially of surface-treated silica particles wherein said particles consist essentially of $SiO_{4/2}$ units containing a sufficient amount of organosiloxy units chemically bonded to the surface of said particles to render the silica filler hydrophobic, said organosiloxy units being provided by at least 0.05 moles of organosilicon hydrophobing compound per mole of $SiO_{4/2}$ units and being selected from the group consisting of $R_3SiO_{1/2}$ units, $R_2SiO$ units, $O_{1/2}R_2SiO(R_2SiO)_dSiR_2O_{1/2}$ units, $XR_2SiO(R_2SiO)_dSiR_2O_{1/2}$ units and mixtures thereof where each R and each X are as above defined and d has an average value of from 1 to 12 inclusive, wherein substantially all of said particles of (B) have an aggregate particle size of no greater than 400 mm (4,000 Angstroms) in their largest dimension such that the mixture of (A) and (B) is an optically clear composition possessing a luminous transmittance value of at least 85% and a haze value of no greater than 4% per 2.54 millimeter thickness of said composition at 23°±2°C according to the procedure set out in ASTM D1003-61 and wherein the haze value of a composition consisting of a mixture of 100 cubic centimeters of (A) at 23°±2°C and 60 grams of (B) does not increase by more than 1% per 2.54 millimeter thickness of said mixture upon heating the mixture from 23°±2°C to 100°±5°C.

2. The composition as claimed in claim 1 wherein (B) is a hydrophobic reinforcing silica filler obtained from the alkaline hydrolysis of $Si(OCH_3)_4$ in the presence of at least 70% of one-half of the stoichiometric amount of water required to completely hydrolyze the theoretical amount of —$OCH_3$ radicals present in the $Si(OCH_3)_4$, at least one alcohol selected from the group consisting of methanol, ethanol, n-propanol and isopropanol, at least one basic catalyst, and at least one organosilicon hydrophobing compound selected from $R_nSiY_{4-n}$, $(R_3Si)_2NH$, $(R_3Si)_2O$, $(R_2SiO)_e$, $(R_2SiNH)_e$, $R'O(R_2SiO)_dR'$, $(R_3Si)_2NR''$, $(R_2SiNR'')_e$, and mixtures of the same where each R' is hydrogen or R'', each R'' is an alkyl radical of from 1 to 4 inclusive carbon atoms, each Y is —OH, —OR, —NHR'' or —$NR''_2$, e has an average value of from 3 to 6 inclusive, n has an average value of from 2 to 3 inclusive, d has an average value of from 1 to 12 inclusive and R is as defined in claim 1, the amount of $Si(OCH_3)_4$ employed being sufficient to provide at least 3 parts by weight of theoretical $SiO_{4/2}$ units per 100 parts by weight of the total amount of $Si(OCH_3)_4$, water, alcohol and basic catalyst.

3. The composition as claimed in claim 1 wherein each R radical is selected from the group consisting of methyl radicals, vinyl radicals and 3,3,3-trifluoropropyl radicals.

4. The composition as claimed in claim 1 wherein said (A) is a polydiorganosiloxane gum having a

viscosity of at least 10 kilopascal · seconds at 25°C and wherein at least two siloxane units present in said (A) contain vinyl radicals, any X radicals present in said (A) being hydroxyl radicals.

5. The composition as claimed in claim 1 wherein each R radical present in said polydiorganosiloxane is selected from the group consisting of methyl radicals, vinyl radicals and 3,3,3-trifluoropropyl radicals, wherein at least 7 mole percent of the siloxane units present in said polydiorganosiloxane contains 3,3,3-trifluoropropyl radicals and no more than 5 mole percent of the siloxane units present in said polydiorganosiloxane contain vinyl radicals, there being no more than one vinyl radical per siloxane unit and no more than one 3,3,3-trifluoropropyl radical per siloxane unit, the mole percent of said siloxane units being based upon the total moles of siloxane units present in said polydiorganosiloxane and wherein said organosiloxy units of (B) consist primarily of organosiloxy units containing one 3,3,3-trifluoropropyl radical per silicon atom, each of the remaining R radicals being selected from the group consisting of methyl radicals and vinyl radicals.

6. The composition as claimed in claim 2 wherein the method by which the filler is obtained comprises the steps of

(I) mixing said water, alcohol and any basic catalyst not provided by the organosilicon hydrophobing compounds together to form a solution,
(II) mixing the total amount of said organosilicon hydrophobing compounds into the solution to form a mixture,
(III) mixing the $Si(OCH_3)_4$ into the mixture to form a composition containing a silica filler, and
(IV) aging the composition for a sufficient amount of time to render the silica filler present in said composition hydrophobic, thereby obtaining a composition containing a hydrophobic reinforcing silica filler.

7. The composition as claimed in claim 2 wherein the method by which the filler is obtained comprises the steps of

(I) mixing said water, alcohol and any basic catalyst not provided by the organosilicon hydrophobing compounds together to form a solution,
(II) adding a solution composed of the $Si(OCH_3)_3$ and the total amount of said organosilicon hydrophobing compounds to the solution of step (I) to form a composition containing a silica filler, and
(III) aging the composition for a sufficient amount of time to render the silica filler present in said composition hydrophobic, thereby obtaining a composition containing a hydrophobic reinforcing silica filler.

8. The composition as claimed in claims 1 or 2, which additionally contains at least one curing agent.

9. An optically clear elastomer which comprises the product formed upon curing the composition of claims 1, 2, or 8.

10. A method for producing an optically clear composition curable to an elastomer characterized by the steps of

(I) mixing

(A) 100 parts by weight of at least one polydiorganosiloxane consisting essentially of siloxane units selected from the group consisting of siloxane units of the average unit formula

$X_aR_bSiO_{\frac{4-a-b}{2}}$ and $X_aR_c$ 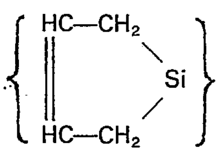 $O_{\frac{2-a-c}{2}}$

wherein each R radical is selected from the group consisting of alkyl radicals of from 1 to 6 inclusive carbon atoms, cyclohexyl radicals, phenyl radicals, halogenated alkyl radicals of from 1 to 10 inclusive carbon atoms and alkenyl radicals of from 2 to 6 inclusive carbon atoms, each X being selected from the group consisting of hydroxyl radicals, hydrogen radicals and alkoxy radicals of from 1 to 6 inclusive carbon atoms, at least 50 percent of the total amount of R radicals and

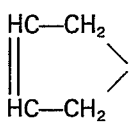

radicals present in said polydiorganosiloxane being methyl radicals, a having a value of from 0 to 1 inclusive, b having a value of from 1 to 3 inclusive and c having a value of from 0 to 1 inclusive, the sum of a+b having a value of from 1 to 3 inclusive, the sum of a+c having a value of from 0 to 1 inclusive, the values of a, b and c being such that the ratio of total R radicals and

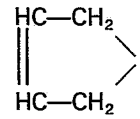

radicals to total silicon atoms present in said polydiorganosiloxane is in the range of from 1.98/1 to 2.02/1 inclusive, said polydiorganosiloxane having a viscosity of at least 0.1 pascal · seconds at 25°C, and

(B) a sufficient amount of a wet, fluid filler composition to provide from 15 to 120 parts by weight per 100 parts by weight of (A) of a hydrophobic reinforcing silica filler consisting essentially of surface-treated silica particles wherein said particles consist essentially of $SiO_{4/2}$ units containing a sufficient amount of organosiloxy units chemically bonded to the surface of said particle to render the silica filler hydrophobic, said organosiloxy units being provided by at least 0.05 moles of organosilicon hydrophobing compound per mole of $SiO_{4/2}$ units and being selected from the group consisting of $R_3SiO_{1/2}$ units, $R_2SiO$ units, $O_{1/2}R_2SiO(R_2SiO)_dSiR_2O_{1/2}$ units, $XR_2SiO(R_2SiO)_dSiR_2O_{1/2}$ units and mixtures thereof where each R and each X are as above and d has an average value of from 1 to 12 inclusive, to form a mixture, without matching the refractive indices of A and B,

(II) removing the volatile portion of said mixture whereby an optically clear composition curable to an elastomer is obtained, and wherein substantially all of said particles of (B) have an aggregate particle size of no greater than 4,000 Angstroms in their largest dimension such that, when the volatile portion has been removed, the mixture of (A) and (B) is an optically clear composition possessing a luminous transmittance value of at least 85% and a haze value of no greater than 4% per 2.54 millimeter thickness of said composition at 23°±2°C according to the procedure set out in ASTM D1003-61 and wherein the haze value of a composition consisting of a mixture of 100 cubic centimeters of (A) at 23°±2°C and 60 grams of (B) does not increase by more than 1% per 2.54 millimeter thickness of said mixture upon heating the mixture from 23°±2°C to 100°±5°C.

**Patentansprüche**

1. Optisch klare, zu einem Elastomer härtbare Zusammensetzung, gekennzeichnet durch

(A) 100 Gew.Tl. mindestens eines Polydiorganosiloxans, das im wesentlichen aus Siloxaneinheiten besteht, ausgewählt aus der Gruppe bestehend aus Siloxaneinheiten mit Mitteleinheiten der Formel

$X_aR_bSiO_{4-a-b/2}$ und $X_aR_c$ 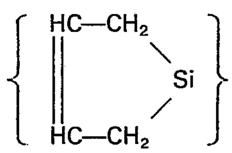 $O_{2-a-c/2}$

worin jedes R aus der Gruppe bestehend aus Alkylrestern mit 1 bis 6 inbegriffenen Kohlenstoffatomen, Cyklohexylresten, Phenylresten, halogenierten Alkylresten mit 1 bis 10 inbegriffenen Kohlenstoffatomen, Alkenylresten mit 2 bis 6 inbegriffenen Kohlenstoffatomen, jedes X aus der Gruppe bestehend aus Hydroxylresten, Wasserstoff und Alkoxyresten mit 1 bis 6 inbegriffenen Kohlenstoffatomen ausgewählt ist und mindestens 50% der Gesamtmenge der Reste R und

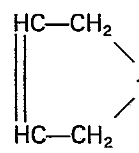 -Reste

die im Polydiorganosiloxan anwesend sind, Methylreste sind und *a* einen Wert von 0 bis einschließlich 1, *b* einen Wert von 1 bis einschließlich 3 und *c* einen Wert von 0 bis einschließlich 1 hat und die Summe von a+b einen Wert von 1 bis einschließlich 3 und die Summe von a+c einen Wert von 0 bis einschließlich 1 beträgt, die Werte von *a, b, c* so gewählt sind, daß das Verhältnis der gesamten Reste R und

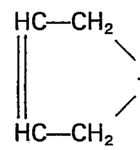 -Reste

zur Gesamtzahl der vorhandenen Siliciumatome im Polydiorganosiloxan im Bereich von 1,98:1 bis einschließlich 2,02:1 beträgt und das Polydiorganosiloxan eine Viskosität von mindestens 0,1 Pa s bei 25°C aufweist und

(B) 15 bis 120 Gew.Tl. eines hydrophoben verstärkenden Siliciumdioxid-Füllstoffes, der im wesentlichen aus oberflächenbehandeltem Siliciumdioxidteilchen besteht, wobei diese Teilchem im

wesentlichen aus $SiO_{4/2}$-Einheiten bestehen, die eine ausreichende Menge an chemisch an die Oberfläche gebundenen Organosiloxyeinheiten enthalten, um den Füllstoff hydrophob zu machen und die Organosiloxyeinheiten mit mindestens 0,05 Molen hydrophobierender Organosiliciumverbindung pro Mol $SiO_{4/2}$-Einheiten versehen ist, die ausgewählt sind aus der Gruppe bestehend aus $R_3SiO_{1/2}$-Einheiten, $R_2SiO$-Einheiten, $O_{1/2}R_2SiO(R_2SiO)_dSiR_2O_{1/2}$-Einheiten, $XR_2SiO(R_2SiO)_dSiR_2O_{1/2}$-Einheiten und Mischungen derselben, wobei jedes R und jedes X die zuvor angegebene Definition haben und *d* einen Mittelwert von 1 bis einschließlich 12 aufweist, wobei im wesentlichen alle Teilchen (B) in aggregierter Form nicht größer als 400 nm (4000 Angstrom) in ihrer längsten Ausdehnung sind und die Mischung von (A) und (B) eine optisch klare Zusammensetzung ist mit einer Lichtdurchlässigkeit von mindestens 85% und einem Trübungswert nach ASTM D 1003-61 von nicht mehr als 4% pro 2,54 mm Schichtdicke der Zusammensetzung bei 23°±2°C, und der Trübungswert der Mischung aus 100 $cm^3$A bei 23°±2°C und 60 g B nicht mehr als 1% pro 2,54 mm Schichtdicke der Zusammensetzung bei Erwärmen der Mischung von 23°±2°C auf 100°±5°C ansteigt.

2. Zusammensetzung nach Anspruch 1, dadurch gekennzeichnet, daß (B) ein hydrophober verstärkender Siliciumdioxyd-Füllstoff ist, erhalten durch alkalische Hydrolyse von $Si(OCH_3)_4$ in Gegenwart von mindestens 70% der halben stöchiometrischen Menge an Wasser, die erforderlicht ist, um die theoretisch in dem $Si(OCH_3)_4$ anwesende Menge an —$OCH_3$-Gruppen zu hydrolysieren und mindestens einem Alkohol, ausgewählt aus der Gruppe von Methanol, Ethanol, n-Propanol und Isopropanol und mindestens einem basischen Katalysator und mindestens einer Organosilicium hydrophobierenden Verbindung ausgewählt aus $R_nSiY_{4-n}$, $(R_3Si)_2NH$, $(R_3Si)_2O$, $(R_2SiO)_e$, $(R_2SiNH)_e$, $R'O(R_2SiO)_dR'$, $(R_3Si)_2NR''$, $(R_2SiNR'')_e$ und Mischungen derselben, wobei jedes R Wasserstoff oder R' ist und jedes R'' ein Alkylrest mit 1 bis einschließlich 4 C-Atomen ist, jedes Y OH, —OR, —NHR'', oder $NR_2''$ ist und *e* einen Mittelwert von 0 bis einschließlich 6, *n* einen Mittelwert von 2 bis einschließlich 3 und *d* einen Mittelwert von 1 bis einschließlich 12 hat und R die in Anspruch 1 angegebene Bedeutung hat und die Menge an $Si(OCH_3)_4$, die verwendet wird, ausreichend ist, mindestens 3 Gew.Tl. der theoretischen $SiO_{4/2}$-Einheiten pro 100 Gew.Tl. Gesamtmenge an $Si(OCH_3)_4$, Wasser, Alkohol und basischen Katalysator zu ergeben.

3. Zusammensetzung nach Anspruch 1, dadurch gekennzeichnet, daß jeder Rest R ausgewählt ist aus der Gruppe bestehend aus Methylresten, Vinylresten und 3,3,3-Trifluorpropylresten.

4. Zusammensetzung nach Anspruch 1, dadurch gekennzeichnet, daß (A) ein Polydiorganosiloxangummi ist, der eine Viskosität mindestens 10 Kilopascal×Sekunden bei 25°C aufweist und bei dem mindestens zwei der in (A) anwesenden Siloxaneinheiten Vinylreste enthalten und jeder der in (A) anwesenden Reste X eine Hydroxylgruppe ist.

5. Zusammensetzung nach Anspruch 1, dadurch gekennzeichnet, daß jeder im Polydiorganosiloxan anwesende Reste R ausgewählt ist aus der Gruppe bestehend aus Methylresten, Vinylresten und 3,3,3-Trifluorpropylresten, wobei mindestens 7 Mol % der im Polydiorganosiloxan anwesenden Siloxaneinheiten 3,3,3-Trifluorpropylreste enthält und nicht mehr als 5% der im Polydiorganosiloxan anwesenden Siloxaneinheiten Vinylradikale enthält und nicht mehr als 1 Vinylradikal pro Siloxaneinheit und nicht mehr als 1 3,3,3-Trifluorpropylrest pro Siloxaneinheit vorhanden ist, wobei sich die Molprozente der Siloxaneinheiten auf die Gesamtmole der im Polydiorganosiloxan vorhandenen Siloxaneinheiten beziehen und wobei die Organosiloxyeinheiten hauptsächlich aus Organosiloxyeinheiten, die einen 3,3,3-Trifluorpropylrest pro Siliciumatom enthalten und jeder der verbleibenden Reste R ausgewählt ist aus der Gruppe Methylreste und Vinylreste.

6. Zusammensetzung nach Anspruch 2, dadurch gekennzeichnet, daß das Herstellungsverfahren des Füllstoffes folgende Schritte aufweist:

(I) Mischen des Wassers, Alkohols und aller basischen Katalysatoren, die nicht Organosilicium hydrophobierende Verbindungen sind und bilden eine Lösung,
(II) Mischen der Gesamtmenge der Organosilicium hydrophobierenden Verbindungen in die Lösung zu einer Mischung,
(III) Mischen des $Si(OCH_3)_4$ in die Mischung, um eine einen Siliciumdioxyd-Füllstoff enthaltende Zusammensetzung zu bilden und
(IV) Altern der Zusammensetzung für eine Zeit, die ausreicht, um den in der Zusammensetzung anwesenden Siliciumdioxyd-Füllstoff zu hydrophobieren, so daß eine einen hydrophoben verstärkenden Siliciumdioxyd-Füllstoff enthaltende Zusammensetzung erhalten wird.

7. Zusammensetzung nach Anspruch 2, dadurch gekennzeichnet, daß das Herstellungsverfahren des Füllstoffes folgende Schritte aufweist:

(I) Mischen des Wassers, Alkohols und aller basischen Katalysatoren, die nicht Organosilicium hydrophobierende Verbindungen sind und Bilden einer Lösung,
(II) Hinzufügen einer Lösung bestehend aus $Si(OCH_3)_4$ und der Gesamtmenge der Organosilicium hydrophobierenden Verbindungen zur Lösung des Schrittes (I), um eine einen Siliciumdioxyd-Füllstoff enthaltende Zusammensetzung zu bilden und
(III) Altern der Zusammensetzung für eine Zeit, die ausreichend ist, um den in der Zusammensetzung anwesenden Siliciumdioxyd-Füllstoff zu hydrophobieren, so daß ein hydrophober verstärkender Siliciumdioxyd-Füllstoff erhalten wird.

8. Zusammensetzung nach Ansprüchen 1 oder 2, dadurch gekennzeichnet, daß sie zusätzlichen noch mindestens ein Härtungsmittel enthält.

9. Optisch klares Elastomer, dadurch gekennzeichnet, daß es durch Härten der Zusammensetzung nach Ansprüchen 1, 2 oder 8 erhalten wurde.

10. Verfahren zum Herstellen einer zu einem Elastomer härtbaren optisch klaren Zusammensetzung, gekennzeichnet durch die Schritte

(I) Mischen

(A) 100 Gew.Tl. mindestens eines Polydiorganosiloxans, das im wesentlichen aus Siloxaneinheiten besteht, ausgewählt aus der Gruppe bestehend aus Siloxaneinheiten mit Mitteleinheiten der Formel

$X_aR_bSiO_{\frac{4-a-b}{2}}$ et $X_aR_c$ 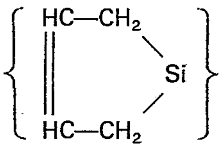 $O_{\frac{2-a-c}{2}}$

wobei jedes R aus der Gruppe bestehend aus Alkylresten mit 1 bis 6 inbegriffenen Kohlenstoffatomen, Cyclohexylresten, Phenyresten, halogenierten Alkylresten mit 1 bis 10 inbegriffenen Kohlenstoffatomen und Alkenylresten mit 2 bis 6 inbegriffenen Kohlenstoffatomen, jedes X aus der Gruppe bestehend aus Hydroxylresten, Wasserstoff- und Alkoxyresten mit 1 bis 6 inbegriffenen Kohlenstoffatomen ausgewählt ist und mindestens 50% der Gesamtmenge der Reste R und

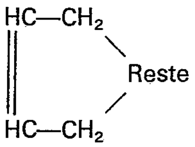

die im Polydiorganosiloxan anwesend sind, Methylreste sind und *a* einen Wert von 0 bis einschließlich 1, *b* einen Wert von 1 bis einschließlich 3 und *c* einen Wert von 0 bis einschließlich 1 hat und die Summe von a+b einen Wert von 1 bis einschließlich 3 und die Summe von a+c einen Wert von 0 bis einschließlich 1 beträgt, die Werte von a, b und c so ausgewählt sind, daß das Verhältnis der gesamten Reste R und

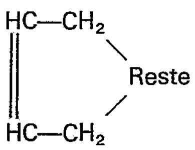

zur Gesamtzahl der vorhandenen Siliciumatome im Polydiorganosiloxan im Bereich von 1,98:1 bis einschließlich 2,02:1 beträgt und das Polydiorganosiloxan eine Viskosität von mindestens 0,1 Pa s bei 25°C aufweist und

(B) einer ausreichenden Menge einer nassen flüssigen Füllstoffzusammensetzung, um 15 bis 120 Gew.Tl. pro 100 Gew.Tl von (A) eines hydrophoben verstärkenden Siliciumdioxyd-Füllstoffes zu bilden, der im wesentlichen aus oberflächenbehandelten Siliciumdioxydteilchen besteht, wobei diese Teilchem im wesentlichen aus $SiO_{4/2}$-Einheiten bestehen, die eine ausreichende Menge an chemisch an die Oberfläche gebundenen Organosiloxyeinheiten enthalten, um den Füllstoff hydrophob zu machen und die Organosiloxyeinheiten mit mindestens 0,05 Molen hydrophobierender Organosiliciumverbindung pro Mol $SiO_{4/2}$-Einheiten versehen ist, die ausgewählt sind aus der Gruppe bestehend aus $R_3SiO_{1/2}$-Einheiten, $R_2SiO$-Einheiten, $O_{1/2}R_2SiO(R_2SiO)_dSiR_2O_{1/2}$-Einheiten, $XR_2SiO(R_2SiO)_dSiR_2O_{1/2}$-Einheiten und Mischungen derselben, wobei jedes R und jedes X die zuvor angegebene Definition haben und *d* einen Mittelwert von 1 bis einschließlich 12 aufweist, um eine Mischung zu bilden, ohne Anpassung der Brechungsindices von A und B,

(II) Entfernen der flüchtigen Anteile aus der Mischung, so daß eine optisch klare, zu einem Elastomer härtbare Zusammensetzung erhalten wird, in der im wesentlichen alle darin enthaltenen Teilchen (B) in aggregierter Form nicht größer als 400 nm (4000 Angström) in ihrer längsten Ausdehnung sind, so daß nach Entfernen der flüchtigen Anteile die Mischung aus (A) und (B) eine optisch klare Zusammensetzung ist mit einer Lichtdurchlässigkeit von mindestens 85% und einem Trübungswert nach ASTM D1003-61 von nicht mehr als 4% pro 2,54 mm Schichtdicke der Zusammensetzung bei 23°±2°C und der Trübungswert der Mischung aus 100 $cm^3$ (A) bei 23°±2°C und 60 g (B) nicht mehr als 1% pro 2,54 mm Schichtdicke der Zusammensetzung bei Erwärmen der Mischung von 23°±2°C auf 100°±5°C ansteigt.

**Revendications**

1. Une composition optiquement transparente vulcanisable en un élastomère, caractérisée par:

(A) 100 parties en poids d'au moins un polydiorganosiloxane essentiellement formé d'unités siloxanes choisies dans le groupe formé des unités siloxanes de la formule d'unité moyenne:

$X_aR_bSiO_{\frac{4-a-b}{2}}$ et $X_aR_c$ 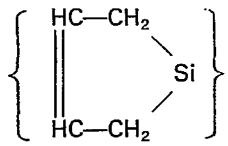 $O_{\frac{2-a-c}{2}}$

où chaque radical R est choisi dans le groupe constitué par les radicaux alkyle de 1 à 6 atomes de carbone inclusivement, les radicaux cyclohexyle, les radicaux phényle, les radicaux alkyle halogénés de 1 à 10 atomes de carbone inclusivement et les radicaux alcényle de 2 à 6 atomes de carbone inclusivement, chaque X étant choisi dans le groupe formé par les radicaux hydroxyle, les radicaux hydrogène et les radicaux alcoxy de 1 à 6 atomes de carbone inclusivement, au moins 50% de la quantité totale de radicaux R et de radicaux

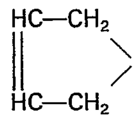

présents dans le polydiorganosiloxane étant des radicaux méthyle, *a* ayant une valeur de 0 à 1 inclusivement, *b* ayant une valeur de 1 à 3 inclusivement et *c* ayant une valeur de 0 à 1 inclusivement, la somme de a+b ayant une valeur de 1 à inclusivement, la somme de a+c ayant une valeur de 0 à 1 inclusivement, les valeurs de *a, b* et *c* étant telles que le rapport des radicaux R et des radicaux

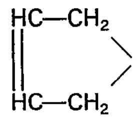

totaux aux atomes de silicium présents dans le polydiorganosiloxane soit dans la gamme de 1,98/1 à 2,02/1 inclusivement, le polydiorganosiloxane ayant une viscosité d'au moins 0,1 Pa . s. à 25°C, et

(B) 15 à 120 parties en poids d'une charge de silice renforçante hydrophobe essentiellement formée de particules de silice à surface traitée, dans laquelle ces particules sont essentiellement formées d'unités $SiO_{4/2}$ contenant une quantité suffisante d'unités organosiloxy liées chimiquement à la surface des particules pour rendre hydrophobe la charge de silice, les unités organosiloxy étant fournies par au moins 0,05 mole de composé organique du silicium conférant des propriétés hydrophobes par mole d'unités $SiO_{4/2}$ et étant choisies dans le groupe formé par les unités $R_3SiO_{1/2}$, les unités $R_2SiO$, les unités $O_{1/2}R_2SiO(R_2SiO)_dSiR_2O_{1/2}$ les unités $XR_2SiO(R_2SiO)_dSiR_2O_{1/2}$ et leurs mélanges, où chaque R et chaque X sont tels que définis ci-dessus et *d* a une valeur moyenne de 1 à 12 inclusivement,

où substantiellement toutes les particules de (B) ont une grosseur de particules d'agrégat non supérieure à 400 nm (4000 Å) dans leur plus grande dimension de sorte que le mélange de (A) et (B) soit une composition optiquement transparente possédant une valeur de facteur de transmission de la lumière d'au moins 85% et une valeur de trouble non supérieure à 4% par 2,54 mm d'épaisseur de la composition à 23±2°C selon la méthode exposée dans ASTM D1003-61 et où la valeur de trouble d'une composition formée d'un mélange de 100 $cm^3$ de (A) à 23±2°C et 60 g de (B) n'augmente pas de plus de 1% par 2,54 mm d'épaisseur du mélange lorsqu'on chauffe le mélange de 23±2°C à 100±5°C.

2. La composition selon la revendication 1, dans laquelle (B) est une charge de silice renforçante hydrophobe obtenue par hydrolyse alcaline de $Si(OCH_3)_4$ en présence d'au moins 70% d'une moitié de la quantité stoechiométrique d'eau nécessaire pour hydrolyser complètement la quantité théorique de radicaux $—OCH_3$ présente dans le $Si(OCH_3)_4$, d'au moins un alcool choisi dans le groupe comprenant le méthanol, l'éthanol, le n-propanol et l'isopropanol, d'au moins un catalyseur basique et d'au moins un composé organique du silicium conférant les propriétés hydrophobes choisi entre $R_nSiY_{4-n}$, $(R_3Si)_2NH$, $(R_3Si)_2O$, $(R_2SiO)_e$, $(R_2SiNH)_e$, $R'O(R_2SiO)_dR'$, $(R_3Si)_2NR''$, $(R_2SiNR'')_e$ et les mélanges de ceux-ci, où chaque R' est l'hydrogène ou R'', chaque R'' est un radical alkyle de 1 à 4 atomes de carbone inclusivement, chaque Y est —OH, —OR, —NHR'' ou $—NR''_2$, *e* a une valeur moyenne de 3 à 6 inclusivement, *n* a une valeur moyenne de 2 à 3 inclusivement, *d* a une valeur moyenne de 1 à 12 inclusivement et R est tel que défini à la revendication 1, la quantité de $Si(OCH_3)_4$ utilisée étant suffisante pour fournir au moins 3 parties en poids d'unités $SiO_{4/2}$ théoriques par 100 parties en poids de la quantité totale de $Si(OCH_3)_4$, d'eau, d'alcool et de catalyseur basique.

3. La composition selon la revendication 1, dans laquelle chaque radical R est choisi dans le groupe formé par les radicaux méthyle, les radicaux vinyle et les radicaux 3,3,3-trifluoropropyle.

4. La composition selon la revendication 1, dans laquelle (A) est une gomme de polydiorganosiloxane

ayant une viscosité d'au moins 10 kPa . s à 25°C et dans laquelle au moins deux unités siloxanes présentes dans (A) contiennent des radicaux vinyle, tous radicaux X présents dans (A) étant des radicaux hydroxyle.

5. La composition selon la revendication 1, dans laquelle chaque radical R présent dans le polydiorganosiloxane est choisi dans le groupe formé par les radicaux méthyle, les radicaux vinyle et les radicaux 3,3,3-trifluoropropyle, dans laquelle au moins 7 moles % des unités siloxanes présentes dans le polydiorganosiloxane contiennent des radicaux 3,3,3-trifluoropropyle et pas plus de 5 moles % des unités siloxanes présentes dans le polydiorganosiloxane contiennent des radicaux vinyle, pas plus d'un radical vinyle par unité siloxane et pas plus d'un radical 3,3,3-trifluoropropyle par unité siloxane n'étant présents, le pourcentage molaire des unités siloxanes étant basé sur les moles totales d'unités siloxanes présentes dans le polydiorganosiloxane, et dans laquelle les unités organosiloxy de (B) sont formées principalement d'unités organosiloxy contenant un radical 3,3,3-trifluoropropyle par atome de silicium, chacun des radicaux R restants étant choisi dans le groupe formé par les radicaux méthyle et les radicaux vinyle.

6. La composition selon la revendication 2, dans laquelle le procédé par lequel la charge est obtenue comprend les étapes suivantes:

(I) mélanger ensemble l'eau, l'alcool et tout catalyseur basique non fourni par les composés organiques du silicium conférant des propriétés hydrophobes pour former une solution,

(II) mélanger à la solution la quantité totale des composés organiques du silicium conférant des propriétés hydrophobes pour former un mélange,

(III) mélanger le $Si(OCH_3)_4$ au mélange pour former une composition contenant une charge de silice, et

(IV) faire vieillir la composition pendant un laps de temps suffisant pour rendre hydrophobe la charge de silice présente dans la composition, obtenant ainsi une composition contenant une charge de silice renforçante hydrophobe.

7. La composition selon la revendication 2, dans laquelle le procédé par lequel la charge est obtenue comprend les étapes suivantes:

(I) mélanger ensemble l'eau, l'alcool et tout catalyseur basique non fourni par les composés organiques du silicium conférant des propriétés hydrophobes pour former une solution,

(II) ajouter à la solution de l'étape (I) une solution composée du $Si(OCH_3)_3$ et de la quantité totale des composés organiques du silicium conférant des propriétés hydrophobes pour former une composition contenant une charge de silice, et,

(III) faire vieillir la composition pendant un laps de temps suffisant pour rendre hydrophobe la charge de silice présente dans la composition, obtenant ainsi une composition contenant une charge de silice renforçante hydrophobe.

8. La composition selon la revendication 1 ou 2, qui contient en outre au moins un agent vulcanisant.

9. Un élastomère optiquement transparent qui comprend le produit formé par vulcanisation de la composition selon la revendication 1, 2 ou 8.

10. Un procédé de préparation d'une composition optiquement transparent vulcanisable en un élastomère, caractérisé par les étapes suivantes:

(I) mélanger:

(A) 100 parties en poids d'au moins un polydiorganosiloxane essentiellement formé d'unités siloxanes choisies dans le groupe formé des unités siloxanes de la formule d'unité moyenne:

$X_aR_bSiO_{\frac{4-a-b}{2}}$ et $X_aR_c$ 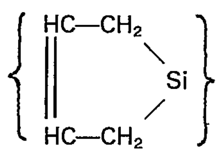 $O_{\frac{2-a-c}{2}}$

où chaque radical R est choisi dans le groupe constitué par les radicaux alkyle de 1 à 6 atomes de carbone inclusivement, les radicaux cyclohexyle, les radicaux phényle, les radicaux alkyle halogénés de 1 à 10 atomes de carbone inclusivement et les radicaux alcényle de 2 à 6 atomes de carbone inclusivement, chaque X étant choisi dans le groupe formé par les radicaux hydroxyle, les radicaux hydrogène et les radicaux alcoxy de 1 à 6 atomes de carbone inclusivement, au moins 50% de la quantité totale de radicaux R et de radicaux

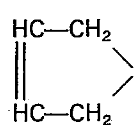

présents dans le polydiorganosiloxane étant des radicaux méthyle, *a* ayant une valeur de 0 à 1 inclusivement, *b* ayant une valeur de 1 à 3 inclusivement et *c* ayant une valeur de 0 à 1 inclusivement, la

somme de a+b ayant une valeur de 1 à 3 inclusivement, la somme de a+c ayant une valeur de 0 à 1 inclusivement, les valeurs de *a, b* et *c* étant telles que le rapport des radicaux R et des radicaux

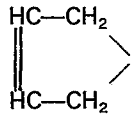

totaux aux atomes de silicium présents dans le polydiorganosiloxane soit dans la gamme de 1,98/1 à 2,02/1 inclusivement, le polydiorganosiloxane ayant une viscosité d'au moins 0,1 Pa . s à 25°C, et

(B) une quantité suffisante d'une composition de charge fluide humide pour fournir 15 à 120 parties en poids par 100 parties en poids de (A) d'une charge de silice renforçante hydrophobe essentiellement formée de particules de silice à surface traitée, dans laquelle ces particules sont essentiellement formées d'unités $SiO_{4/2}$ contenant une quantité suffisante d'unités organosiloxy liées chimiquement à la surface des particules pour rendre hydrophobe la charge de silice, les unités organosiloxy étant fournies par au moins 0,05 mole de composé organique du silicium conférant des propriétés hydrophobes par mole d'unités $SiO_{4/2}$ et étant choisies dans le groupe formé par les unités $R_3SiO_{1/2}$, les unités $R_2SiO$, les unités $O_{1/2}R_2SiO(R_2SiO)_dSiR_2O_{1/2}$, les unités $XR_2SiO(R_2SiO)_dSiR_2O_{1/2}$ et leurs mélanges, où chaque R et chaque X sont tel que définis ci-dessus et *d* a une valeur moyenne de 1 à 12 inclusivement, pour former un mélange, sans harmoniser les indices de réfraction de A et B,

(II) élimer la partie volatile du mélange de façon à obtenir une composition optiquement transparente vulcanisable en un élastomère, et où substantiellement toutes les particules de (B) ont une grosseur de particules d'agrégat non supérieure à 400 nm (4000 Å) dans leur plus grande dimension de sorte que, après que la portion volatile ait éte éliminée, le mélange de (A) et (B) soit une composition optiquement transparente possédant une valeur de facteur de transmission de la lumière d'au moins 85% et une valeur de trouble non supérieure à 4% par 2,54 mm d'épaisseur de la composition à 23±2°C selon la méthode exposé dans ASTM D1003-61 et où la valeur de trouble d'une composition formée d'un mélange de 100 $cm^3$ de (A) à 23±2°C et 60 g de (B) n'augmentent pas de plus de 1% par 2,54 mm d'épaisseur du mélange lorsqu'on chauffe le mélange de 23±2°C à 100±5°C.